# EUROPÄISCHE PATENTSCHRIFT

(11) **EP 0 914 989 B1**
(45) Veröffentlichungstag und Bekanntmachung des Hinweises auf die Patenterteilung: **02.01.2004**
(21) Anmeldenummer: 98120513.1
(22) Anmeldetag: 29.10.1998
(51) Int. Cl.: B60R 5/04, B60R 21/06, B65H 18/10

(54) **Sicherheitseinrichtung für Kraftfahrzeuge, insbesondere Laderaumtrennvorrichtung für Kombinations-Personenkraftwagen od. dgl**
Safety device for motor vehicles, in particular luggage compartment cover for estate cars or similar
Dispositif de sécurité pour véhicules automobiles, en particulier couvercle pour le compartiment à bagages d'un véhicule break ou similaire

(30) Priorität: 10.11.1997 DE 19749444
(43) Veröffentlichungstag der Anmeldung: 12.05.1999
(73) Patentinhaber: BOS GmbH & Co. KG, 73760 Ostfildern (DE)
(72) Erfinder: Crisp, Terence Sam, 3140 Keerbergen (BE)
(74) Vertreter: Patentanwälte Ostriga & Sonnet

(56) Entgegenhaltungen:
- DE-A- 2 749 560
- DE-U- 29 704 725

## Beschreibung

Die Erfindung betrifft eine Sicherheitseinrichtung für Fahrzeuge, insbesondere Laderaum-Trennvorrichtung für Kraftwagen, wie zum Beispiel für Kombinations-Personenkraftwagen od. dgl.

Eine Laderaum-Trennvorrichtung ist in der DE 27 49 560 A1 beschrieben. Bei der bekannten Laderaum-Trennvorrichtung ist die Wickelwelle mit einem Federmotor versehen, dessen Drehmoment der Abrollbewegung der Werkstoffbahn entgegenwirkt. Bei der Werkstoffbahn kann es sich um eine Folie, um ein Netz oder um ein anderes textiles flexibles bzw. biegeschlaffes Flächengebilde handeln.

Die Wickelwelle kann, mit oder ohne Gehäuse (z.B. Rollogehäuse) versehen, grundsätzlich an beliebigen Stellen des fahrzeugseitigen Einbaufeldes montiert werden. Überwiegend üblich ist eine sich nahezu über die gesamte Laderaumbreite erstreckende Wickelwelle, die z.B. hinter den Fondsitzen eines Kombinations-Personenkraftwagens, insbesondere an der Rückfläche der Fondsitzlehnen, gehalten ist.

Um die Werkstoffbahn der bekannten Laderaum-Trennvorrichtung in ihre Betriebstellung zu versetzen, kann diese z.B. oberhalb der Wickelwelle oben im Fahrzeug oder benachbart bzw. an einer klappenartigen Hecktür lösbar befestigt sein. Zu seiner Befestigung kann der freie Endbereich der Werkstoffbahn zumindest mit einer Zugstange versehen sein, deren beidendseitig angeordnete Befestigungsköpfe in korrelierende fahrzeugseitige Einhängeösen eingeschoben werden können.

Ebensogut kann die Werkstoffbahn auch aus einem Netz bestehen, welches in einer vertikalen Ebene ausgezogen bzw. aufgespannt und mittels der Zugstange benachbart dem Fahrzeughimmel an seitlichen Einhängeösen z.B. der C-Säule, lösbar befestigt ist.

Zur Sicherung der sich in ihrer Betriebsstellung befindlichen aufgespannten bzw. abgerollten Werkstoffbahn ist die Wickelwelle entweder an einem Ende oder an beiden Enden mit je einer Rastscheibe drehfest verbunden, die mit einer in der Halterung der Wickelwelle gelagerten Sperrklinke kooperiert. Letztere wird von einer Rückstellkraft, z.B. mittels einer Feder, in ihrer Sperrstellung gehalten und blockiert dabei die Wickelwelle gegen ein ungewolltes Abrollen der Werkstoffbahn. Dieses ist bei einem plötzlichen Aufprall des Ladegut auf die Werkstoffbahn, z.B. bei einer unvorhergesehenen Vollbremsung, äußerst wichtig.

Damit die Werkstoffbahn der bekannten Laderaum-Trennvorrichtung in ihre Betriebsstellung ausgezogen werden kann, muß die Sperrklinke mittels eines Betätigungsgliedes in ihre Lösestellung versetzt werden. Dieses kann entweder in umständlicher Weise dadurch geschehen, daß das Betätigungsglied dauernd von Hand entgegen einer die Sperrklinke belastenden Rückstellkraft in der Lösestellung gehalten wird. Dies erfordert jedenfalls bei beidendseitig der Wickelwelle vorgesehenen Sperreinrichtungen die Hilfe einer zweiten Person.

Andererseits ist gemäß der DE 27 49 560 A1 die alternative Möglichkeit vorhanden, das Betätigungsglied in seiner Lösestellung zu verrasten. Letzteres kann jedoch zu dem erheblichen Nachteil führen, daß der Benutzer nach dem Aufspannen der Werkstoffbahn vergessen kann, die Sperrklinke oder beide Sperrklinken wieder in ihre Sperrstellung zu versetzen, so daß die Werkstoffbahn bei einem Aufprall des Ladeguts nicht ausreichend gesichert wäre.

Aus der DE 297 04 725 U1 ist als Sicherheitseinrichtung eine Laderaum-Trennvorrichtung für Kraftwagen gemäß dem Oberbegriff des Anspruchs 1 bekannt, bei der eine Sperrklinke mit einer drehfest zu einer Wickelwelle angeordneten Rastscheibe kooperiert. Mittels eines Tastfingers für die Werkstoffbahn wird die Sperrklinke bei aufgewickelter Werkstoffbahn in ihrer Lösestellung gehalten. Bei einem Abrollen der Werkstoffbahn sorgt sodann ein Reibschluß zwischen Reibflächen der Rastscheibe und einer Reibscheibe dafür, daß die Reibscheibe in Abrolldrehrichtung mit geschleppt wird, wobei ein Steuernocken dafür sorgt, daß die Sperrklinke in ihrer Lösestellung verbleibt. Erst wenn bei einem Einhängen des freien Endbereichs der Werkstoffbahn in fahrzeugseitige Befestigungsstellen die Werkstoffbahn in Aufrollrichtung zurückgedreht wird, dreht sich die Reibscheibe in Aufwickelrichtung mit und gibt die Sperrklinke frei, die in ihre Sperrstellung hineinschwenkt.

Der Erfindung liegt die Aufgabe zugrunde, die bekannte Sicherheitseinrichtung derart weiterzuentwickeln, daß diese eine Bau- und Betriebsweise gestattet, welche dem Sicherheitsbedürfnis der Fahrgäste noch stärker Rechnung trägt.

Die Erfindung löst diese Aufgabe mit den Merkmalen des Anspruchs 1. Demnach ist eine Sicherheitseinrichtung für Fahrzeuge vorgesehen, insbesondere Laderaum-Trennvorrichtung für Kraftwagen, wie zum Beispiel für Kombinations-Personenkraftwagen od. dgl., mit einer entgegen dem Drehmoment eines Motors, zum Beispiel eines Federmotors, von einer Wickelwelle, die fahrzeugseitig in einer Halterung aufgenommen ist, abrollbaren, mit ihrem abgerollten freien Endbereich fahrzeugseitig lösbar festzulegenden Werkstoffbahn, mit mindestens einer mit der Wickelwelle drehfest verbundenen Rastscheibe, die mit einer in der Halterung gelagerten Sperrklinke kooperiert, wobei die Sperrklinke von einer Rückstellkraft, insbesondere von einer Federkraft in ihrer Sperrstellung gehalten wird und die Wickelwelle gegen ein Abrollen der Werkstoffbahn blockiert, wobei die Sperrklinke von einer beweglichen Kurvenbahn gesteuert ist, welche mittels einer von der Drehbewegung der Wickelwelle abgeleiteten Bewegung antreibbar ist, und wobei die Übertragung der Drehbewegung von der Wickelwelle auf die bewegliche Kurvenbahn unter Zwischenschaltung eines bei der Antriebsbewegung potentielle Energie sammelnden Antriebsübertragungsgliedes erfolgt.

Das Prinzip der Erfindung besteht somit im wesentlichen darin, daß durch Zwischenschaltung eines Antriebsübertragungsgliedes zwischen Wickelwelle und Kurvenbahn ein potentieller Energiespeicher vorgesehen ist, der automatisch durch Bewegung der Wickelwelle, insbesondere beim Abwickeln einer Werkstoffbahn (z.B. Tuchbahn, Folienbahn, Netzbahn) potentielle Energie speichert. Diese potentielle Energie kann dazu genutzt werden, die Kurvenbahn in ihre gewünschte Position anzutreiben.

Durch Zwischenschaltung eines Antriebsübertragungsgliedes ist eine besonders sichere Verbindung zwischen Wickelwelle und Kurvenbahn geschaffen. Damit trägt die Sicherheitseinrichtung dem Sicherheitsbedürfnis der Fahrgäste Rechnung.

Ein wesentliches Merkmal zur Lösung der vorgenannten Aufgabe besteht darin, daß die Sperrklinke von einer beweglichen Kurvenbahn gesteuert ist, welche mittels einer von der Drehbewegung der Wickelwelle abgeleiteten Bewegung antreibbar ist.

Zu ihrer Steuerung weist die Sperrklinke zweckmäßig einen mit der Kurvenbahn kooperierenden Steuernocken auf, so daß sich die Sperrklinke bezüglich der Rastscheibe entweder in ihrer Lösestellung oder in ihrer Sperrstellung befindet.

Die Steuerbewegung der Sperrklinke ist dabei so ausgestaltet: Die Beweglichkeit bzw. Bewegungsbahn der Kurvenbahn ist durch zwei voneinander distanzierte Anschläge, nämlich von einem Löseanschlag und von einem Sperranschlag, begrenzt. Beginnend beim Löseanschlag hält die Kurvenbahn im Verlaufe ihrer Bewegung relativ zum Steuernocken der Sperrklinke letztere über den weitaus größten Abschnitt der Kurvenbahnlänge in einer von der Sperrscheibe abgehobenen, d.h. gelösten, Stellung. Während des Abrollens der Werkstoffbahn wird demnach die Kurvenbahn bewegt und zum Ende der Bewegung, d.h. in der Nähe des Sperranschlages, versetzt die Kurvenbahn die Sperrklinke vermittels deren Steuernockens in die Sperrstellung mit der Rastscheibe.

Zwischen der Wickelwelle und der beweglichen Kurvenbahn besteht keine starre Antriebsverbindung. Vielmehr ist als Antriebsübertragungsglied zwischen der Wickelwelle und der Kurvenbahn mindestens ein Federelement, nämlich eine Sperrfeder, eingeschaltet, welche sich bei der Abrollbewegung der Wickelwelle "auflädt", also eine potentielle Federenergie erhält, die versucht, die Kurvenbahn in Richtung Sperranschlag zu bewegen, d.h. mit demjenigen Bereich der Kurvenbahn (Steuerkurve) in Deckung zu bringen, der ein Einfallen der Sperrklinke in die Sperrzähne der Rastscheibe bewirkt.

Grundsätzlich ist es möglich, anstelle des beschriebenen Formrichtgesperres ein Reibrichtgesperre einzusetzen.

Die Übertragung der Drehbewegung von der Wickelwelle auf die bewegliche Kurvenbahn unter Zwischenschaltung eines nachgiebigen, bei der Antriebsbewegung potentielle Energie sammelnden Antriebsübertragungsgliedes kann entweder ungehindert, z.B. ungebremst, oder aber gehemmt, d.h. gebremst, erfolgen.

Für den Fall, daß die Antriebsverbindung ungebremst ausgebildet ist, wird die zu Beginn der Abrollbewegung der Wikkelwelle mittels der Kurvenbahn in ihrer Lösestellung gehaltene Sperrklinke relativ unvermittelt in ihre Sperrstellung einfallen. Um in diesem Falle ein von dem Gesperre ungehindertes Abrollen der Werkstoffbahn zu ermöglichen, kann die Einfallbewegung der Sperrklinke, z.B. durch ein Reibungsglied gebremst, oder aber durch ein Zeitglied, z.B. auch durch ein elektronisches Zeitglied, gesteuert sein. In einem solchen Falle verbliebe der Bedienungsperson immerhin genügend Zeit, die Werkstoffbahn abzurollen, aufzuspannen und festzulegen bevor die Sperrklinke in ihre Sperrstellung einfällt, welche durch die Bewegung der Kurvenbahn zum Sperranschlag hin bereits vorbereitet ist.

Andererseits kann die Bewegung der Kurvenbahn in Richtung Sperranschlag - wie vorerwähnt - auch gebremst erfolgen, d.h. die Kurvenbahn benötigt eine durch einen Bewegungsverzögerer, beispielsweise durch eine Fettbremse, ein stoßdämpferartiges Gebilde oder dergleichen geschaffene Steuerzeit, an deren Ende erst die Sperrklinke in ihre Sperrstellung an der Rastscheibe versetzt wird. Diese Steuerzeit wird durch Wahl der Bremswirkung des Bewegungsverzögerers so bemessen, daß die Bedienungsperson genügend Zeit zur Verfügung hat, die Werkstoffbahn, beispielsweise eine Netzbahn, ungehindert von der Sperrwirkung des aus Rastscheibe und Sperrklinke bestehenden Formrichtgesperres von der Wickelwelle abzurollen, d.h. aufzuspannen und z.B. die Zugstange in den Einhängeösen zu befestigen.

Erst wenn dies geschehen ist, wird der Sperrbereich der Kurvenbahn durch die Sperrfeder an den Sperranschlag verlangsamt herangeführt, so daß der Steuernocken, d.h. zugleich die Sperrklinke, automatisch in die Sperrposition einfallen kann. Wenn nun die Werkstoffbahn in unvorhergesehener Weise im Abrollsinne belastet wird, kann das Richtgesperre seine Sicherungsfunktion wahrnehmen.

Ein Aufrollen der Werkstoffbahn auf die Wickelwelle erfolgt ungehindert vom Richtgesperre in dessen Freilaufrichtung. Da sich die Sperrklinke indessen immer noch in ihrer Sperrstellung befindet, muß die Kurvenbahn in ihre Ausgangsstellung zum Löseanschlag hin zurückbewegt werden. Diese Rückstellbewegung der Kurvenbahn kann von Hand über ein besonderes Betätigungsglied erfolgen.

In weiterer Ausgestaltung der Erfindung ist die Rückstellung der Kurvenbahn in ihre Ausgangslage aber auch in folgender Weise möglich und zwar unabhängig davon, ob die vorerwähnte Antriebsbewegung der Kurvenbahn ungebremst oder gebremst erfolgt:

Die vorerwähnte, als Antriebszwischenglied zwischen der Wickelwelle und der Kurvenbahn angeordnete Feder oder Federanordnung, die allgemein als Sperrfeder bezeichnet werden kann, wird in beschriebener Weise durch die Abrollbewegung der Wickelwelle in Sperrbewegungsrichtung der Kurvenbahn gespannt. Zugleich wird bei dieser Bewegung eine im Vergleich zur Sperrfeder wesentlich schwächere Rückstellfeder in entgegengesetzter Richtung gespannt, d.h. die Rückstellfeder versucht die Kurvenbahn zum Löseanschlag hin zurückzubewegen. Diese Rückstellbewegung kann die Rückstellfeder dann ausüben, wenn die Werkstoffbahn wieder aufgewickelt ist, wenn also auch die Sperrfeder ihre potentielle Federenergie verloren hat.

Damit die nur eine verhältnismäßig geringe Rückstellkraft aufweisende Rückstellfeder ihre Rückstellbewegung durchführen kann, ist es für den Fall, daß ein Bewegungsverzögerer vorhanden ist, zweckmäßig, letzteren so auszubilden, daß er nur bei der Abrollbewegung der Wickelwelle bremst, bei der Aufrollbewegung der Wickelwelle aber im wesentlichen wirkungslos ist.

In diesem Zusammenhang sind Fettbremsen, z.B. rotierende Fettbremsen, zweckmäßig, die in der einen Drehrichtung wie ein Freilauf wirken, d.h. der Rückstellbewegung der Kurvenbahn praktisch keinen Bremswiderstand entgegensetzen, so daß die Rückstellkraft der verhältnismäßig schwachen Rückstellfeder jedenfalls in der Lage ist, die Rückstellbewegung der Kurvenbahn vorzunehmen.

In weiterer Ausgestaltung der Erfindung ist die Kurvenbahn hauptsächlich kreisförmig.

Weiterhin ist es zweckmäßig, die Kurvenbahn koaxial zur Wickelwelle anzuordnen.

Eine andere Erfindungsvariante besteht darin, die Sperrfeder als Spiralfeder auszubilden. Diese Spiralfeder ist vorteilhaft ebenfalls koaxial zur Wickelwelle angeordnet. Die Spiralfeder ist mit ihrem einen (äußeren) Federende mit der als Nockenscheibe ausgebildeten Kurvenbahn und mit ihrem anderen (inneren) Federende mit der Wickelwelle drehfest verbunden. Die drehfeste Verbindung mit der Wickelwelle kann über einen Wellenstumpf erfolgen, welcher wiederum mit der Rastscheibe drehfest ist.

Auch die Rückstellfeder ist als Drehfeder ausgebildet, z.B. als Schrauben- bzw. Schenkelfeder, deren eines Ende gehäusefest, d.h. z.B. am Rollogehäuse festgelegt ist, während das andere Ende der Rückstellfeder mit der kreisförmigen Kurvenbahn, insbesondere mit der Nockenscheibe, drehfest ist.

Mit der beschriebenen erfindungsgemäßen Anordnung kann insbesondere sichergestellt werden, daß trotz Aktivierung des Richtgesperres bei ausgefahrener Werkstoffbahn, sei diese nur teilweise oder gänzlich ausgefahren, in einfacher Weise, sogar in automatischer Weise (z.B. bei Vorhandensein einer Rückstellfeder oder einer Verzögerungsbewegung der Sperrklinke) ein ungehindertes Abrollen der Werkstoffbahn aus der Ausgangsstellung heraus möglich ist.

Die Breite der Werkstoffbahn ist im Zusammenhang mit der erfindungsgemäßen Anordnung unkritisch; die Breite der Werkstoffbahn kann eine Laderaumbreite abdecken oder auch nur Gurtbreite, wie z.B. bei einem Sicherungsgurt, betragen.

Gemäß einer weiteren vorteilhaften Ausgestaltung der Erfindung ist die Kurvenbahn mittels einer Schaltvorrichtung mit der Wickelwelle koppel- bzw. von dieser entkoppelbar. Dies hat den Vorteil, daß eine besondere Art des Antriebs der Kurvenbahn mittels einer von der Drehbewegung der Wickelwelle abgeleiteten Bewegung getroffen werden kann. Insbesondere kann ein Antrieb der Kurvenbahn bei einer Abwickelbewegung der Werkstoffbahn zunächst in Abwickelrichtung erfolgen und in einem zweiten Abschnitt eine Antriebsbewegung der Kurvenbahn in Aufwickelrichtung, also in entgegengesetzter Richtung, erfolgen. Diese beiden Abschnitte der Antriebsbewegung der Kurvenbahn sind somit definiert voneinander getrennt und können unterschiedliche, definierte sowie voneinander unabhängige Antriebe umfassen.

Die Übertragung der Drehbewegung von der Wickelwelle auf die bewegliche Kurvenbahn erfolgt somit bei dieser Ausgestaltung der Erfindung unter Zwischenschaltung zweier, unabhängiger Glieder. Einerseits kann ein Antriebsglied vorgesehen sein, welches die Drehbewegung der Wickelwelle direkt auf die bewegliche Kurvenbahn überträgt. Zusätzlich ist ein bei der Antriebsbewegung potentielle Energie aufnehmendes Antriebsübertragungsglied vorgesehen, welches für die rückwärtige Bewegung der Kurvenbahn verantwortlich ist.

Das direkte Antriebsglied kann mit der Kurvenbahn gekoppelt bzw. von dieser entkoppelt werden. In gekoppeltem Zustand ist ein Drehschluß zwischen Wickelwelle und Kurvenbahn vorhanden. In entkoppeltem Zustand ist die Kurvenbahn lediglich über das Antriebsübertragungsglied mit einem raumfesten Befestigungspunkt verbunden.

Gemäß einer besonders vorteilhaften Ausführungsform ist die Schaltvorrichtung nach Art einer Antriebssperrklinke ausgebildet, die schwenkbar an der Kurvenbahn angeordnet ist. Dies ermöglicht ein automatisches, gesteuertes Verschwenken der Antriebssperrklinke mittels Steuerflächen. Die Verschwenkung kann dabei ausschließlich aufgrund einer Drehung der Kurvenbahn relativ zu einer fahrzeugseitigen Halterung erfolgen. Damit schaltet die Schaltvorrichtung automatisch.

Weitere Vorteile der Erfindung ergeben sich aus den nicht zitierten Unteransprüchen sowie anhand der nachfolgenden Beschreibung. In den Zeichnungen sind zwei bevorzugte Ausführungsbeispiele der Erfindung näher beschrieben. In den Zeichnungen zeigen:
Fig. 1 eine auseinandergezogene Darstellung des Endbereichs eines ersten Ausführungsbeispiels eines Netz-Rollos,
Fig. 2 eine schematische Teildarstellung der Anordnung gemäß Fig. 1 in Lösestellung entsprechend der in Fig. 1 eingetragenen Blickrichtung Z,
Fig. 3 die Anordnung gemäß Fig. 2 während der Abrollbewegung der Werkstoffbahn,
Fig. 4 die Anordnung gemäß den Fig. 2 und 3 bei abgerollter Werkstoffbahn in der Sperrstellung,
Fig. 5 die Anordnung gemäß den Fig. 2-4 nach Wiederaufrollen der Werkstoffbahn,
Fig. 6 in auseinandergezogener, räumlicher Darstellung ein zweites Ausführungsbeispiel einer erfindungsgemäßen Sicherheitseinrichtung,
Fig. 7 in vergrößerter Darstellung die wesentlichen Elemente der Sicherheitseinrichtung gemäß Fig. 6,
Fig. 8 in auseinandergezogener, räumlicher Darstellung den Endbereich eines dritten Ausführungsbeispiels einer erfindungsgemäßen Sicherheitseinrichtung,
Fig. 9 die Sicherheitseinrichtung gemäß Fig. 8 in zusammengebautem Zustand in schematischer Schnittansicht,
Fig. 10 eine perspektivische Ansicht eines Teilbereichs der zusammengebauten Sicherheitseinrichtung gemäß Fig. 9,
Fig. 11 eine Ansicht des Teilbereiches einer Sicherheitseinrichtung gemäß Ansichtspfeil XI in Fig. 10,
Fig. 12 eine perspektivische Ansicht der Sicherheitsvorrichtung gemäß Ansichtspfeil XII in Fig. 8 in zusammengebautem Zustand und
Fig. 13 eine schematische Schnittansicht gemäß Schnittlinie XIII-XIII in Fig. 8 einer Sicherheitseinrichtung in zusammengebautem Zustand.

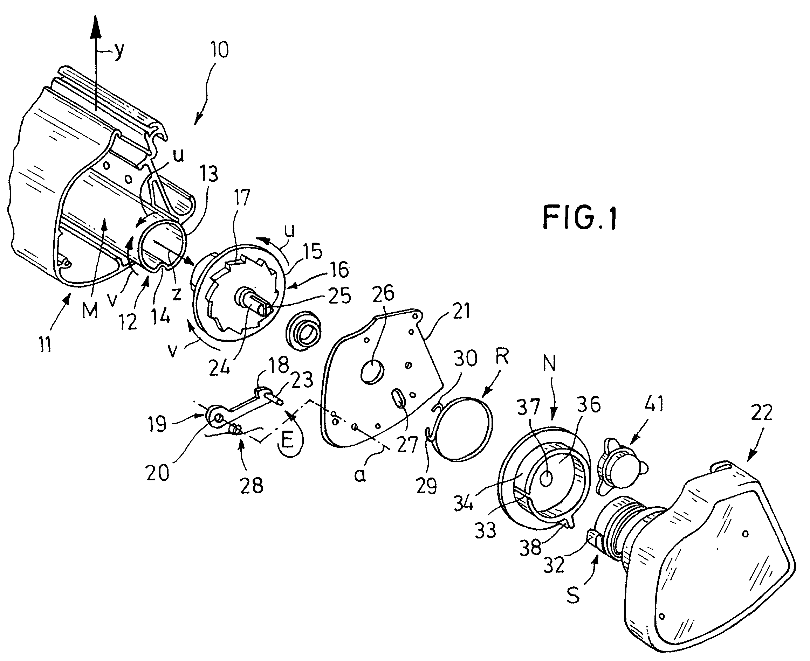

Gemäß Fig. 1 ist die nur teilweise dargestellte Laderaum-Trennvorrichtung insgesamt mit der Bezugsziffer 10 bezeichnet, deren Rollogehäuse die Bezugsziffer 11 trägt und eine fahrzeugseitige Halterung darstellt.

Im Rollogehäuse 11 ist eine Wickelwelle 12 drehbar gelagert, deren Rohrkörper 13 auf seiner Außenmantelfäche M eine nicht gezeigte Werkstoffbahn, hier in Form eines textilen Netzes, trägt, welches entsprechend dem die Abwickeldrehrichtung bezeichnenden Drehpfeil u in Richtung y ausgezogen und durch eine lösbare Einhängebefestigung einer nicht dargestellten Zugstange aufgespannt wird. Die Aufwickeldrehrichtung ist mit v bezeichnet. Zur Befestigung des inneren Netzrandes auf dem Rohrkörper 13 dient eine axiale Kedernut 14, welche zur Außenmantelfläche M hin offen ist.

Der Rohrkörper 13 nimmt einen nicht dargestellten Federmotor auf, dessen Rückstellmoment der Ausziehbewegung u bzw. y entgegenwirkt.

Mit der Wickelwelle 12 drehfest verbunden ist eine auf einer kreisrunden Flanschplatte 15 befestigte Rastscheibe 16 mit Sperrzähnen 17, deren Zahnflanken so ausgebildet sind, daß sie in Verbindung mit der Sperrnase 18 einer Sperrklinke 19 die Rastscheibe 16 in Abwickeldrehrichtung u sperren, in Aufwickeldrehrichtung v hingegen der Aufwickelbewegung keinen Widerstand entgegensetzen. Es handelt sich hierbei also um ein Formrichtgesperre.

Die Sperrklinke 19 ist auf einer nicht dargestellten Achse mit ihrem Lagerloch 20 gelagert. Die geometrische Lage der Achse ist mit a symbolisiert. Die Achse ist in einer Tragplatte 21 gehalten, welche gemeinsam mit der Endkappe 22 am Rollogehäuse 11 befestigt ist.

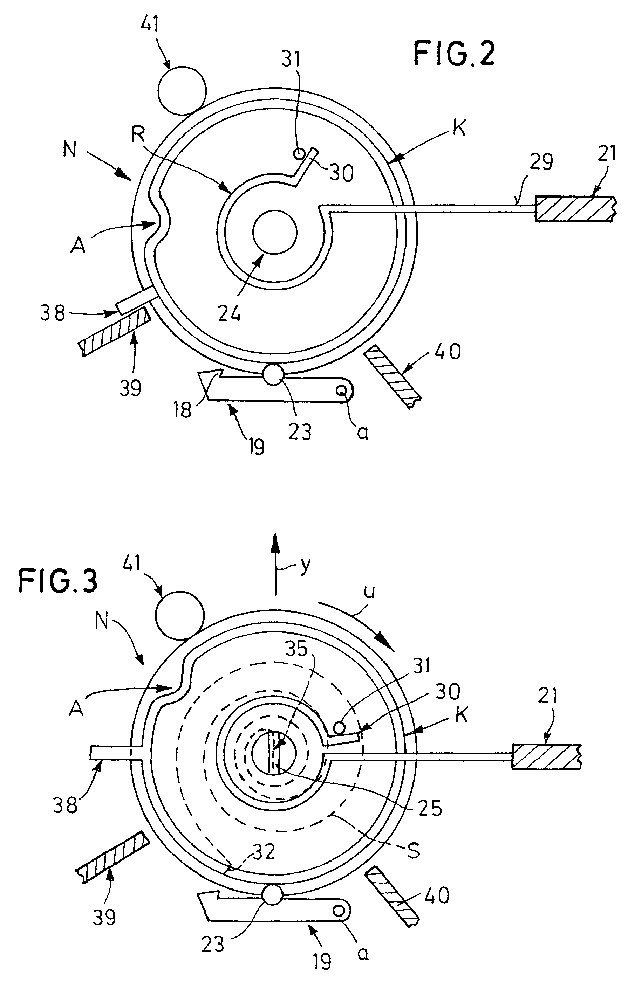

Die Sperrklinke 19 besitzt einen Steuernocken 23, welcher von einer drehbaren Kurvenbahn K geführt wird, die schematisch in den Fig. 2-5 dargestellt ist.

Die Kurvenbahn K, die in Fig. 1 nicht zu erkennen ist, ist Bestandteil einer im wesentlichen kreisrunden Nockenscheibe N.

Die Rastscheibe 16 ist mit einem zentralen Wellenstumpf 24 versehen, der endstirnseitig einen radialen Mitnehmerschlitz 25 aufweist. Der Wellenstumpf 24 durchsetzt eine etwa zentrale Öffnung 26 der Tragplatte 21, während der Steuernokken 23 ein Langloch 27 der Tragplatte 21 durchgreift. Die Sperrklinke 19 ist in ihrer Einfallrichtung E mittels einer Schenkelfeder 28 rückstellbelastet.

Zwischen der Tragplatte 21 und der Nockenscheibe N ist eine Drehfeder, und zwar eine Rückstellfeder R, koaxial angeordnet, deren eines Federende 29 an der Tragplatte 21 widergelagert ist und deren anderes freies Federende 30 an einem Mitnehmerstift 31 (in Fig. 1 nicht sichtbar) formschlüssig druckfest anliegt.

Eine andere Drehfeder, die Sperrfeder S, deren Federkraft wesentlich größer ist als die der Rückstellfeder R, stellt eine Spiralfeder dar, deren äußeres haarnadelförmig gekrümmtes Federende 32 in einen Axialschlitz 33 eines Ringbundes 34 der Nockenscheibe N eingreift, während das innere Federende 35 in dem Mitnehmerschlitz 25 des Wellenstumpfes 24 der Rastscheibe 16 formschlüssig aufgenommen ist. Im montierten Zustand befindet sich die Sperrfeder S im wesentlichen innerhalb des vom Ringbund 34 umschlossenen axialen Aufnahmeraumes 36.

Der Wellenstumpf 24, welcher die Rückstellfeder R koaxial durchsetzt, durchgreift auch die zentrale Lageröffnung 37 der Nockenscheibe N. Die Nockenscheibe N ist demnach lose auf dem Wellenstumpf 24 gelagert. Eine Drehkupplung zwischen dem Wellenstumpf 24 und der Nockenscheibe N findet demnach lediglich unter Vermittlung der als Spiralfeder ausgebildeten Sperrfeder S statt.

Vom Ringbund 34 ragt radial nach außen ein Anschlagnokken 38 vor, welcher mit zwei gehäusefesten Rippen innen in der Endkappe 22 zusammenwirkt. Diese beiden Rippen sind aus den Fig. 2-5 ersichtlich und mit Löseanschlag 39 sowie mit Sperranschlag 40 bezeichnet.

Die Funktion der Anordnung gemäß Fig. 1 ist folgende:

Die Nockenscheibe N kann mit ihrem Anschlagnocken 38 zwischen dem Löseanschlag 39 und dem Sperranschlag 40 mit einem Umfangswinkel von etwa 250° rotieren. Die Kurvenbahn K bildet überwiegend eine kreiszylindrische Außenmantelfläche, die lediglich einen radial nach innen versetzten konkaven Rücksprung A aufweist.

Wenn sich der Steuernocken 23 im Rücksprung A befindet, ist die Sperrklinke 19 eingefallen, d.h. ihre Sperrnase 18 sperrt die Rastscheibe 16. Im übrigen entsprechen die schematischen Darstellungen der Fig. 2-5 der mit Z bezeichneten Blickrichtung in Fig. 1.

Erwähnt werden muß noch ein Drehverzögerer 41 in Form einer Fettbremse 41, die in Abwickeldrehrichtung u der Wikkelwelle 12 bremst, in umgekehrter Drehrichtung, in der Aufwickelrichtung v also, jedoch wie ein Freilauf wirkt.

Die Fettbremse 41 ist innen an der Endkappe 21 befestigt und weist ein nicht dargestelltes Zahnrad auf, welches mit einem ebenfalls nicht dargestellten Zahnkranz außen an der Nockenscheibe N kämmt.

Fig. 2 zeigt die Ausgangsstellung der Kurvenbahn K.

Wenn die Netzbahn in Richtung y ausgezogen wird und sich dabei die Wickelwelle 12 in Abrollrichtung u dreht, nimmt der Mitnehmerschlitz 25 das innere Federende 35 der Sperrfeder S mit, so daß schließlich auch das äußere Federende 32 und ebenfalls die Nockenscheibe N mit ihrer Kurvenbahn K sich in Umfangsrichtung u - allerdings entgegen der Bremswirkung der Fettbremse 41 - bewegen.

Die Umlaufbewegung der Nockenscheibe N in Richtung u verläuft also verlangsamt. Gemäß Fig. 2 liegt der Anschlagnocken 38 der Nockenscheibe N noch an dem Löseanschlag 39 an. Der Steuernocken 23 der Sperrklinke 19 befindet sich dabei außen auf der Kurvenbahn K. Auch die Rückstellfeder R befindet sich - ebenso wie die Sperrfeder S - noch in ihrer jeweiligen entspannten Ausgangsstellung.

Fig. 3 schildert den Zustand, gemäß welchem die Ausziehbewegung der Netzbahn in Richtung y und die Abrollbewegung der Netzbahn in Abrollrichtung u schon etwas fortgeschritten sind.

Dabei hat sich der Anschlagnocken 38 bereits um einen gewissen Umfangswinkelbetrag in Drehrichtung u vom Löseanschlag 39 wegbewegt. Der Steuernocken 23 der Sperrklinke 19 befindet sich immer noch außen auf der Kurvenbahn K. Bei dieser Abrollbewegung in Richtung u wird die Sperrfeder S bereits gespannt und speichert potentielle Energie. Diese potentielle Energie versucht, die Nockenscheibe N entgegen der Bremswirkung der Fettbremse 41 in Richtung u weiterzudrehen. Die Rückstellfeder R, deren freies Federende 30 vom Mitnehmerstift 31 der Nockenscheibe N gespannt wird, widersetzt sich der Drehbewegung in Richtung u. Indessen ist die Federrückstellkraft der Rückstellfeder R wesentlich geringer als die Rückstellkraft der Sperrfeder S. Auf diese Weise rotiert die Nockenscheibe N in Abrolldrehrichtung u mit einer verlangsamten Bewegung, welche vom Bremswiderstand der Fettbremse 41 definiert wird.

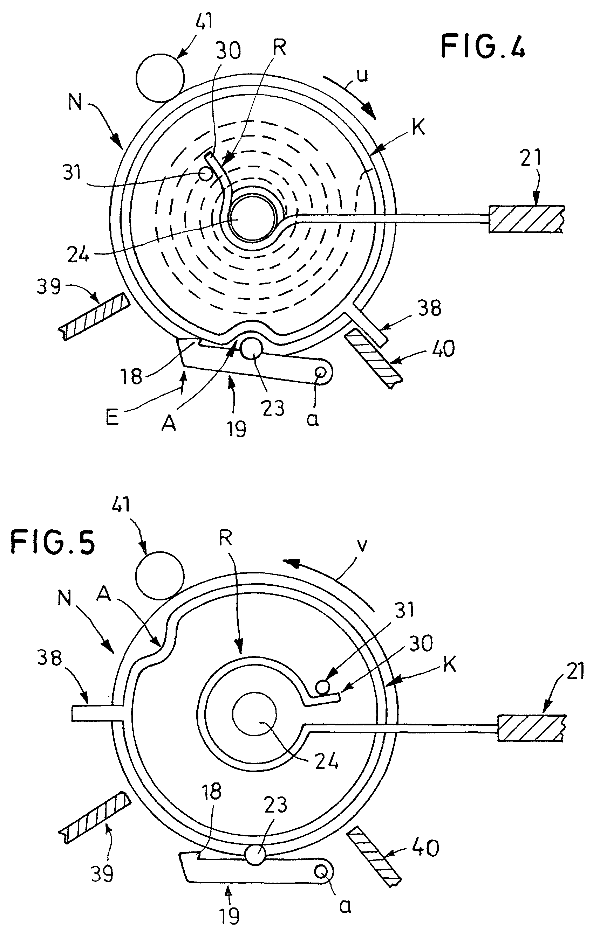

Fig. 4 zeigt, daß sich bei fortschreitender Abrollbewegung in Drehrichtung u der Anschlagnocken 38 der Kurvenscheibe N an den anderen gehäusefesten Anschlag, den Sperranschlag 40, angelegt hat, womit die Umfangsbewegung der Kurvenscheibe N um etwa 250° beendet ist.

An dieser Stelle ist der Steuernocken 23 mit dem Rücksprung A ausgerichtet, so daß die Schenkelfeder 28 (vgl. Fig. 1) den Steuernocken 23, und damit die Sperrklinke 19, in den Rücksprung A der Kurvenbahn K in Einfallrichtung E hineindrücken kann, so daß sich der Sperrzahn 18 in Sperreingriff mit der Rastscheibe 16 befindet. Bevor dies geschieht, hat die Bedienungsperson genügend Zeit, das Netz in seiner aufgespannten Befestigungslage lösbar in seiner Schutzposition zu fixieren.

Fig. 4 zeigt außerdem, daß die Rückstellfeder R durch den fortschreitend weitergedrehten Mitnehmerstift 31 noch weitergedreht wurde und damit ihre maximale Spannlage erreicht hat.

Wenn nun die Netzbahn in Aufrollrichtung v gänzlich von der Wickelwelle 12 aufgewickelt werden soll, geschieht dies gemäß Fig. 5 folgendermaßen:

Die Netzbahn wird aus ihrer aufgespannten Lage gelöst und der Federmotor der Wickelwelle 12 wickelt die Netzbahn in Aufwickelrichtung v gänzlich auf. Wenn dieser Zustand erreicht ist, hat die Sperrfeder S ihre potentielle Energie verloren, so daß die Rückstellfeder R sich entspannen kann, indem ihr freies Federende 30 in Aufwickelrichtung v gegen den Mitnehmerstift 31 drückt und dabei die Nockenscheibe N in Drehrichtung v über den Zustand gemäß Fig. 5 so weit zurückdreht, bis der Anschlagnocken 38 wiederum seine Ausgangsposition gemäß Fig. 2 erreicht hat.

Die durch die Rückstellfeder R bewirkte Rückstellbewegung in Drehrichtung v erfolgt dabei ohne den Widerstand der Fettbremse 41, da diese in Drehrichtung v wie ein Freilauf wirkt. Bereits gemäß Fig. 5 (vgl. ebenfalls Fig. 2) hat die Sperrklinke 19 wiederum ihre Lösestellung eingenommen.

Ein zweites Ausführungsbeispiel einer erfindungsgemäßen Sicherheitseinrichtung gemäß den Fig.' 6 und 7 kommt anstelle der bei dem Ausführungsbeispiel gemäß den Fig. 1 bis 5 benötigten zwei Federn R und S mit einer einzigen Torsionsfeder T aus. Gleiche bzw. gleichwirkende Elemente sind bei den beiden Ausführungsbeispielen mit gleichen Bezugsziffern versehen.

Die Torsionsfeder T ist auf einem Wickelwellen-Lagerzapfen 62 angeordnet und über eine auf dem Wickelwellen-Lagerzapfen 62 gelagerte Drehmitnahme 42 mit ihrem einen Ende 51 fest mit der Wickelwelle 12 verbunden. Wenn die Wickelwelle 12 im Abwicklungssinne, also in der Drehrichtung gemäß Pfeil u bewegt wird, wird auch die Torsionsfeder T in Drehung versetzt.

Das Abtriebsende 52 der Torsionsfeder T ist über ein Zwischenbauteil 53 mit einer Vielnutwelle 54 einer Nockenscheibe N formschlüssig gekuppelt. Das Zwischenbauteil 53 kann dabei eine mit der Vielnutwelle 54 zusammenwirkende, nicht dargestellte Innenverzahnung aufweisen.

Die Nockenscheibe N ist prinzipiell frei, vorzugsweise zwischen zwei nicht dargestellten Anschlägen drehbar. Die Anschläge können dabei analog zu dem ersten Ausführungsbeispiel gemäß den Fig. 1 bis 5 fest relativ zu dem Rollogehäuse angeordnet sein.

Die Nockenscheibe N ist mit der Wickelwelle 12 somit lediglich über die Torsionsfeder T verbunden. Die Torsionsfeder T ist also ein Antriebsübertragungsglied für die Nockenscheibe N und zwar, was später detailliert erläutert wird, in zwei unterschiedliche Drehrichtungen.

Die Bewegung der Nockenscheibe N wird begrenzt durch ein an ihr angreifendes Verzögerungsglied, auf das später eingegangen wird. Eine Bewegung der Nockenscheibe N hat zur Folge, daß ein Betätigungsstift 57, der auf der Außenumfangsfläche K der Nockenscheibe N anliegt, gesteuert wird. Die Steuerung des Betätigungsstiftes 57 bewirkt eine Steuerung einer Sperrklinke 19.

Die Außenumfangsfläche der Nockenscheibe N entspricht damit einer Kurvenbahn K, die durch Drehung der Nockenscheibe N über einen Umfangswinkel, zumindest zwischen zwei Positionen, nämlich einer Ausgangsposition und einer Endposition entsprechend den beiden Anschlägen möglich ist.

Es soll nun verhindert werden, daß sich die Nockenscheibe N beim Abwickeln der Werkstoffbahn W direkt bzw. mit derselben Umdrehungszahl pro Zeiteneinheit bewegt wie die Wickelwelle 12.

Dieses geschieht dadurch, daß die Nockenscheibe N mit einem Bewegungsverzögerer, hier mit einer Fettbremse 55, getrieblich gekuppelt ist, welche bei Drehung der Torsionsfeder T, also bei einer Drehung der Wickelwelle 12 im Abrollsinne u der Werkstoffbahn, die Nockenscheibe N bremst. Dabei nimmt die Torsionsfeder T potentielle Energie auf. Erst wenn ein gewisser Betrag an Rotationsenergie in Federspeicherenergie umgesetzt ist, dreht die Nockenscheibe N entgegen der Bremswirkung der Fettbremse 55 weiter, und zwar so weit, bis eine Aussparung 56 der Nockenscheibe N mit dem Betätigungsstift 57 in Eingriff gerät.

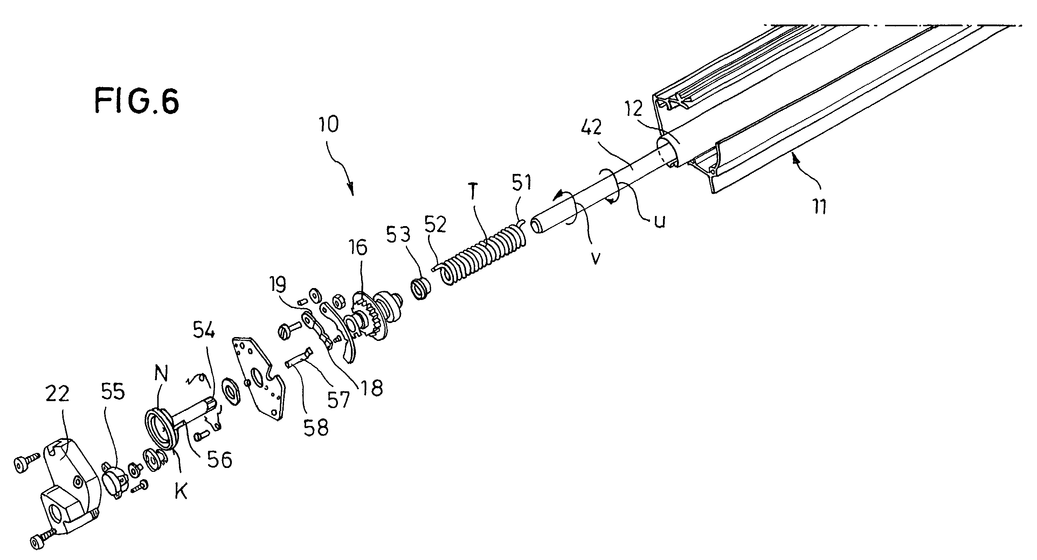

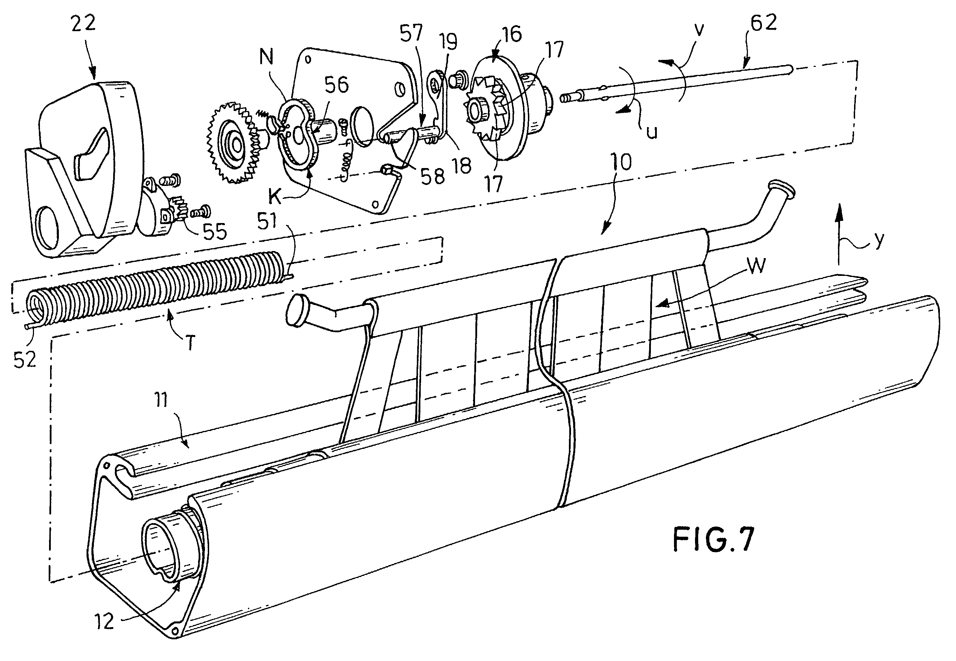

Der Betätigungsstift 57 ist mit der Sperrklinke 19 fest verbunden, die analog zu dem Ausführungsbeispiel gemäß den Fig. 1 bis 5 mit einer Schenkelfeder in Einfallrichtung federbelastet ist. Die Schenkelfeder ist in den Fig. 6 und 7 der Übersicht halber nicht dargestellt.

Wenn der Betätigungsstift 57 mit seinem bezüglich Fig. 6 und 7 linken Ende 58 in die Aussparung 56 der Nockenscheibe N hineinfällt, drückt die Schenkelfeder die Sperrklinke 19 gegen den Außenumfang der Rastscheibe 16. Das Formrichtgesperre 16, 19 sperrt und verhindert ein weiteres Abwickeln der Werkstoffbahn W.

Der Betätigungsstift 57 liegt mit seinem linken Ende 58 auf der Kurvenbahn K ständig auf. Der Betätigungsstift 57 des Ausführungsbeispiels gemäß den Fig. 6 und 7 entspricht somit dem Steuernocken 23 des Ausführungsbeispiels gemäß den Fig. 1 bis 5.

Zum Zwecke einer gewünschten Deaktivierung des Sperrmechanismus für den Fall, daß beispielsweise das Rollogehäuse 11 (das z.B. als Werkstoffbahn W eine Netzbahn enthalten kann) an einer klappbaren Fondsitzlehne befestigt ist und die Fondsitzlehne nach vorne geklappt wird, kann ein nicht dargestelltes Pendelgewicht in der Endkappe 22 des Rollogehäuses 11 vorgesehen sein. Dieses Pendelgewicht kann bei nach vorn geklappter Fondsitzlehne den Sperrmechanismus außer Funktion setzen. Wäre dies nicht der Fall so würde, bedingt durch Fahrerschütterungen, wie Fahrbahnstöße, sich eine Ratschenbewegung ergeben, die ähnlich wie bei einer Hebewinde die Sitzlehne immer weiter nach oben ziehen würde.

Es kann selbstverständlich auch vorgesehen sein, einen Sperrmechanismus mit einem Entriegelungshebel oder Verstellhebel des Sitzes zu kuppeln, für den Fall, daß die Sitzlehne aus einer aufrechten Lage in eine Komfortlage, also weiter nach hinten geneigt, verschwenkt werden soll. Dies kommt einem weiteren Aupziehen der Werkstoffbahn W gleich, wobei die Sperrwirkung des Formrichtgesperres 16, 19 verhindert werden muß.

Durch Abwickeln der Werkstoffbahn W wird die Torsionsfeder T zunächst gespannt. Die Nockenscheibe N wird dadurch aus ihrer Ruhelage verdreht, wobei diese Bewegung durch den Bewegungsverzögerer (z.B. Fettbremse 55) gebremst, d.h. zeitverzögert, erfolgt. Die Federkonstante der Torsionsfeder T und Bewegungsverzögerer sind dabei so ausgelegt, daß eine Zeitverzögerung erreicht wird, die es dem Benutzer gestattet, die Werkstoffbahn bis zur gewünschten Länge auszuziehen und an den dafür vorgesehenen fahrzeugseitigen Halterungen lösbar zu befestigen. Die Nockenscheibe N wird nun automatisch aufgrund der Federkraft der Torsionsfeder T so weit gedreht, bis das linke Ende 58 des Betätigungsstiftes 57 mit der Aussparung 56 in Eingriff gerät: das Formrichtgesperre 16, 19 befindet sich in seiner Sperrstellung.

Da die Torsionsfeder T in beide Richtungen, also sowohl in Richtung des Pfeiles u entsprechend der Abwickeldrehrichtung als auch in Richtung des Pfeiles v entsprechend der Aufwickeldrehrichtung vorgespannt werden kann, ist die bei dem Ausführungsbeispiel gemäß den Fig. 1 bis 5 vorgesehene Rückstellfeder R bei dem Ausführungsbeispiel gemäß den Fig. 6 und 7 entbehrlich. Bei vollständig aufgewickelter Werkstoffbahn kann die Torsionsfeder T bereits in Richtung v zumindest geringfügig vorgespannt sein, so daß die Nockenscheibe N mit ihrer Kurvenbahn K an einem ersten, nicht gezeigten Löseanschlag anliegt. In dieser Position, also bei Anliegen der Nockenscheibe N am Löseanschlag 39, befindet sich die Sperrklinke 19 in ihrer Lösestellung, also außer Eingriff mit den Sperrzähnen 17 der Rastscheibe 16. D.h., daß aus dieser Stellung heraus die Werkstoffbahn frei abgewickelt werden kann.

Beim Abwickeln der Werkstoffbahn W wird die Torsionsfeder T zunächst entspannt und anschließend in entgegengesetzter Richtung, also in Richtung u, gespannt. Dadurch erfolgt eine Bewegung der Nockenscheibe N wie bereits beschrieben in Abwickelrichtung u, bis die Nockenscheibe N an einem zweiten, nicht gezeigten Sperranschlag anstößt. Bei Erreichen des Sperranschlages ist die Aussparung 56 so positioniert, daß der Betätigungsstift 57 in die Aussparung 56 eingreifen kann und die Sperrklinke 19 in ihre Schließstellung verschwenkt.

Bei abgewickelter Werkstoffbahn W wird aufgrund der gespeicherten potentiellen Federenergie die Nockenscheibe N ständig zu dem nicht gezeigten Sperranschlag hin beaufschlagt. D.h., daß die Sperrklinke 19 bei abgewickelter Werkstoffbahn W mit ihrem Sperrzahn 18 ständig zwischen die Sperrzähne 17 eingreift und eine Abwickelbewegung der Wickelwelle 12 verhindert.

Die Federkonstante der Torsionsfeder T ist dabei so. abgestimmt, daß bei verschiedenen Ausziehlängen der Werkstoffbahn W die gespeicherte Federenergie genügend groß ist, um die Nockenscheibe N gegen den Sperranschlag hin zu beaufschlagen.

Wird die Werkstoffbahn W aufgewickelt, können die flachen Seiten der Sperrzähne 17 problemlos an der Sperrnase 18 der Sperrklinke 19 vorbeigleiten. Beim Aufwickeln der Werkstoffbahn W entspannt sich die Torsionsfeder T zunächst, bis sie in entgegengesetzter Richtung, also in Drehrichtung v, wieder geringfügig gespannt wird. In der gespannten Position befindet sich die Torsionsfeder T wieder in ihrer Ausgangslage, und beaufschlagt die Nockenscheibe N hin zu ihrem Löseanschlag. In dieser Lage der Nockenscheibe N befindet sich die Aussparung 56 nicht mit dem Betätigungsstift 57 in Eingriff, so daß die Sperrklinke 19 in Lösestellung ist, d.h. die Sperrzähne 17 der Rastscheibe 16 freigibt.

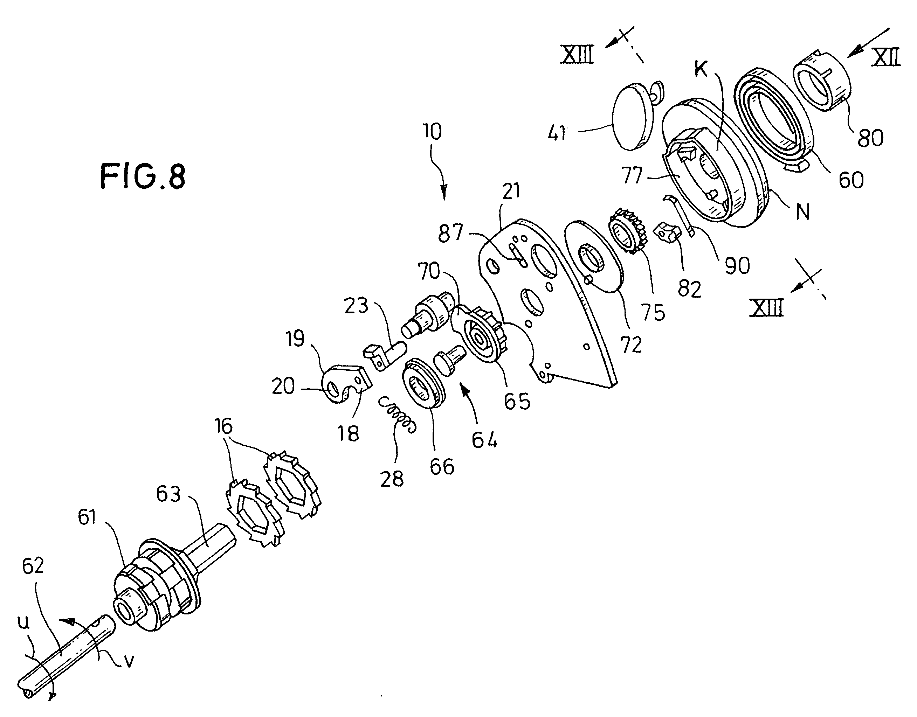

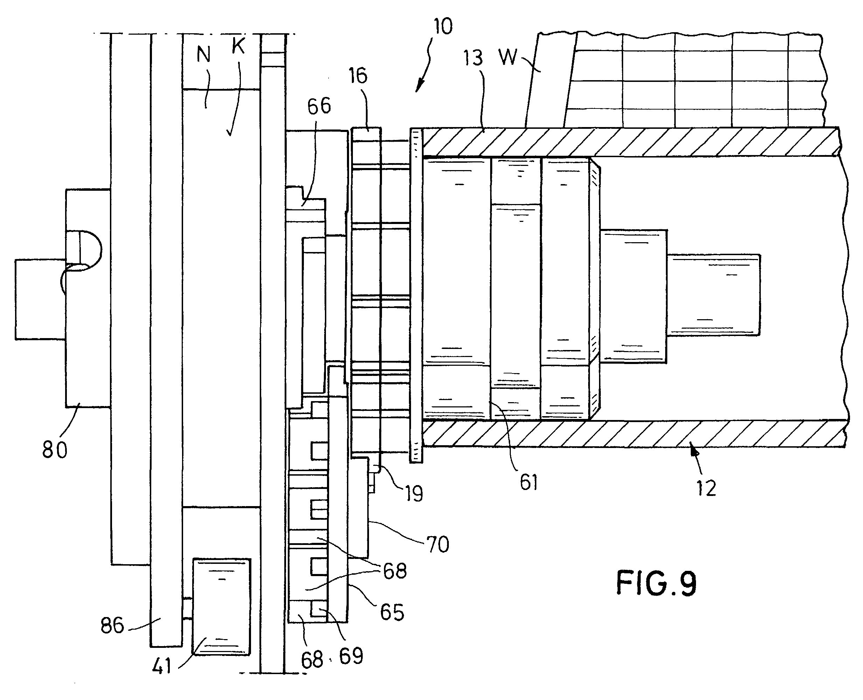

Im folgenden wird ein drittes Ausführungsbeispiel anhand der Fig. 8 bis 13 beschrieben.

Fig. 8 zeigt die als Laderaumtrennvorrichtung ausgebildete Sicherheitseinrichtung 10 in auseinandergezogener Darstellung. Die in Fig. 8 nicht gezeigte Wickelwelle 12 befindet sich etwa im linken unteren Eckbereich der Fig. Mit der Wickelwelle 12 drehfest verbunden ist ein Zwischenteil 61, welches auf einem fahrzeugseitig festgehaltenen Lagerzapfen 62 gehalten ist. Auf einem Stumpf 63 des Zwischenteils 61 sind drehfest verbunden mit dem Zwischenteil 61, und damit auch drehfest verbunden mit der Wickelwelle 12, zwei Rastscheiben 16 angeordnet. Die beiden Rastscheiben 16 können beliebig auch als ein einziges Bauteil entsprechend den oben beschriebenen Ausführungsbeispielen ausgebildet sein.

Mit den Rastscheiben 16 wirkt eine Sperrklinke 19 zusammen, die eine Sperrnase 18 aufweist. Die Sperrklinke 19 wird von einer Feder 28 in Einfallrichtung zugbelastet.

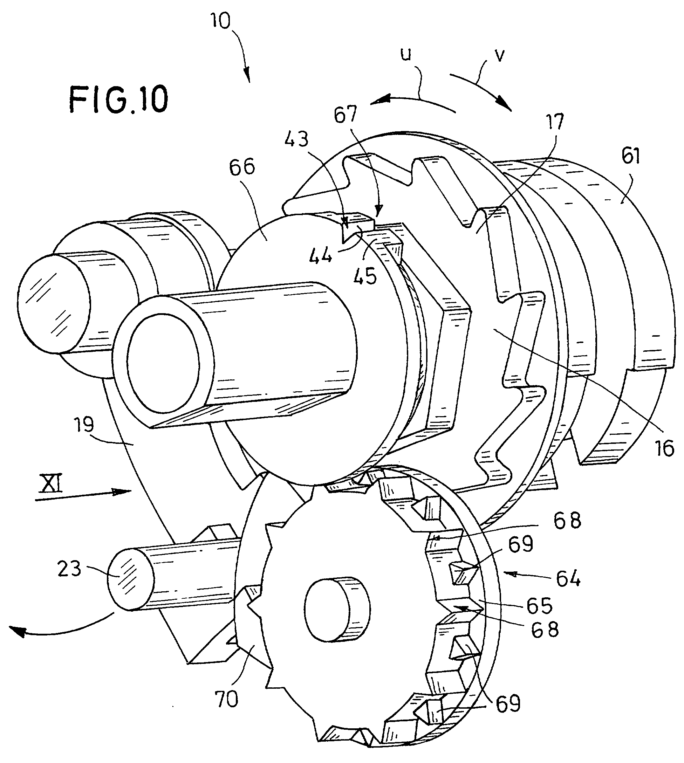

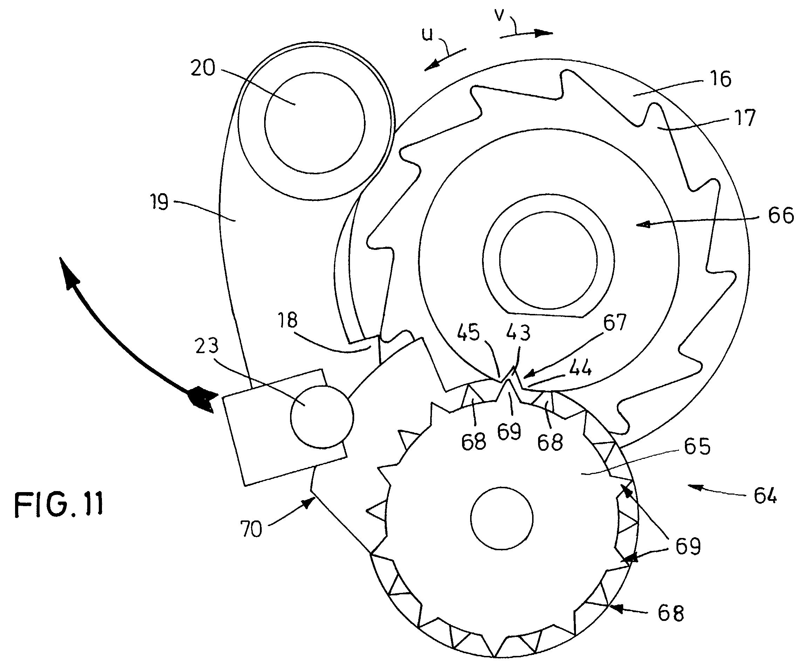

Die Sperrklinke 19 ist prinzipiell mittels zweier unterschiedlicher Mechanismen an einem Einfallen in ihre Sperrstellung zu behindern. Der erste Mechanismus umfaßt eine Vorrichtung 64 mit einem Nockenelement 65 und einem Nockenantriebsrad 66. Das Nockenantriebsrad 66 ist über das Zwischenteil 61 drehfest mit der Wickelwelle 12 verbunden. Wie insbesondere aus den Fig. 10 und 11 ersichtlich ist, weist das Nockenantriebsrad 66 auf seiner Umfangsfläche eine besondere Doppelzahnanordnung 67 auf. Diese wirkt mit Zähnen 68, 69 des Nockenelementes 65 zusammen.

Die Zähne 68 und 69 weisen in Umfangsrichtung abwechselnd unterschiedliche axiale Längen auf. Eine keilförmige Lücke 43 zwischen den beiden Einzelzähnen 44, 45 der Doppelzahnanordnung 67 wirkt derart mit den axial kurz gehaltenen Zähnen 69 zusammen, daß bei jeweils einer vollen Umdrehung des Nockenantriebsrades 66 das Nockenelement 65 um einen Winkel gedreht wird, der dem Winkel eines von zwei axial kurz gehaltenen Zähnen 69 gebildeten Kreissegments des Nockenelementes 65 entspricht.

Da beim Ausführungsbeispiel zehn axial kurz gehaltene Zähne 69 vorgesehen sind, bewirkt eine volle Umdrehung des Nockenantriebsrades 66 um 360° eine Drehung des Nockenelementes 65 um 36°.

Das Nockenelement 65 weist einen Nocken 70 auf, der bei Zusammenwirken mit der Sperrklinke 19 letztere von dem Einfallen in ihre Sperrstellung abhält. Dieser Zustand ist in Fig. 11 dargestellt. Die Sperrzähne 17 der Rastscheibe 16 können sich hier gerade an der Sperrnase 18 der Sperrklinke 19 vorbeibewegen.

Bei vollständig aufgewickelter Werkstoffbahn W befindet sich das Nockenelement 65 in einer Drehposition relativ zu dem Zwischenteil 61, in der die Sperrklinke 19 nicht in ihrer Sperrstellung angeordnet ist. Die Sperrklinke 19 sperrt die Rastscheiben 16 somit nicht, so daß die Werkstoffbahn W frei abgezogen werden kann.

Durch die Abziehbewegung der Werkstoffbahn W wird die Wickelwelle 12 in Abwickelrichtung u gedreht. Dementsprechend wird, wie insbesondere in Fig. 11 ersichtlich ist, das Nokkenelement 65 im entgegengesetzten Drehsinne angetrieben. Dabei wird nach mehreren Umdrehungen des Nockenantriebsrades 66 der Nocken 70 derart von der Sperrklinke 19 bzw. von dem Steuerzapfen 23 der Sperrklinke 19 wegbewegt, daß die Sperrklinke 19 in ihre Sperrstellung einfallen könnte.

Beim Ausführungsbeispiel ist die Anordnung der Vorrichtung 64 derart getroffen, daß nach zwei vollständigen Umdrehungen des Nockenantriebsrades 66 der Nocken 70 nicht mehr mit dem Steuerzapfen 23 zusammenwirkt und somit prinzipiell die Sperrklinke 19 für eine Einfallbewegung in ihre Sperrposition freigibt. Dies berücksichtigt, daß die Ausziehlänge einer Werkstoffbahn W bei zwei vollständigen Umdrehungen der Wickelwelle 12 einer minimalen Ausziehlänge entspricht, die für typische Anwendungen im Kraftfahrzeugbereich von Interesse ist.

Die maximale Ausziehlänge der Werkstoffbahn W ist hier derart mit der Vorrichtung 64 abgestimmt, daß bei maximaler Ausziehlänge der Werkstoffbahn W die Wickelwelle 12 und damit auch das Nockenantriebsrad 66 gerade neun Umdrehungen vollführt. Das Nockenelement 65 mit dem Nocken 70 kommt somit während eines Ausziehvorganges der Werkstoffbahn W nicht wieder in ihre Ausgangsstellung gemäß Fig. 11 zurück.

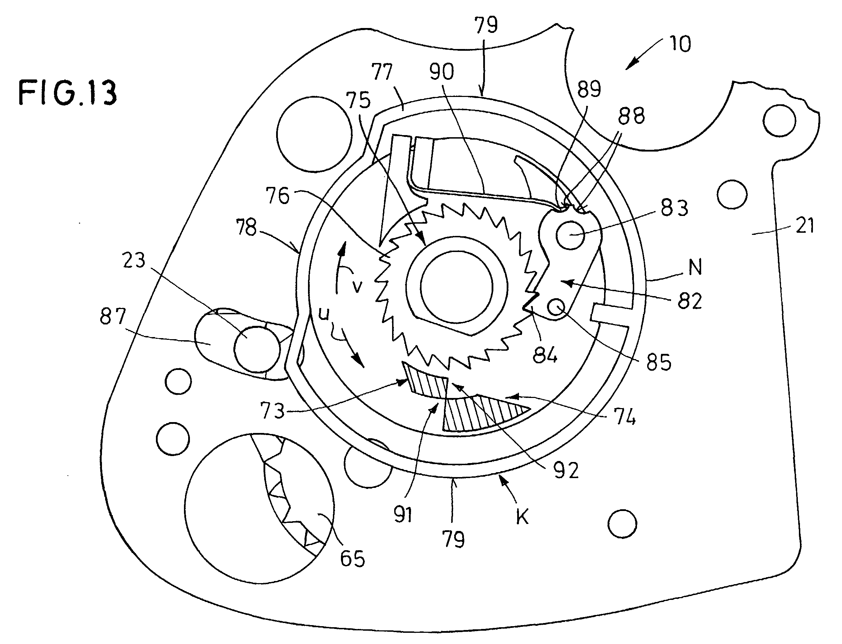

Im folgenden wird der zweite Mechanismus beschrieben, der die Sperrklinke 19 ebenfalls von einem Einfallen in ihre Sperrstellung abhalten kann. Dieser zweite Mechanismus befindet sich im wesentlichen in dem bezüglich Fig. 8 oberen rechten Randbereich und ist damit von einer Tragplatte 21 von dem oben beschriebenen Mechanismus 64 räumlich getrennt. Auf der Tragplatte 21 ist eine Montageplatte 72 mit Steuerflächen 73 und 74 (Fig. 13) befestigt, worauf erst später eingegangen wird.

Koaxial zur Wickelwelle 12 ist auf dem Stumpf 63 des Zwischenteils 61, drehfest mit dem Stumpf 63 verbunden, ein Antriebsglied 75 angeordnet. Das Antriebsglied 75 ist nach Art eines Zahnrades mit einer Vielzahl von Zähnen 76 ausgestaltet, die als Sperrzähne ausgebildet sind.

Koaxial zu dem Antriebsglied 75 ist eine Nockenscheibe N angeordnet. Die Nockenscheibe N umfaßt einen kragenförmigen Fortsatz 77, welcher mit seiner Außenumfangsfläche eine bewegliche Kurvenbahn K bildet. Die Kurvenbahn K umfaßt dabei zwei unterschiedliche Funktionsbereiche 78 und 79.

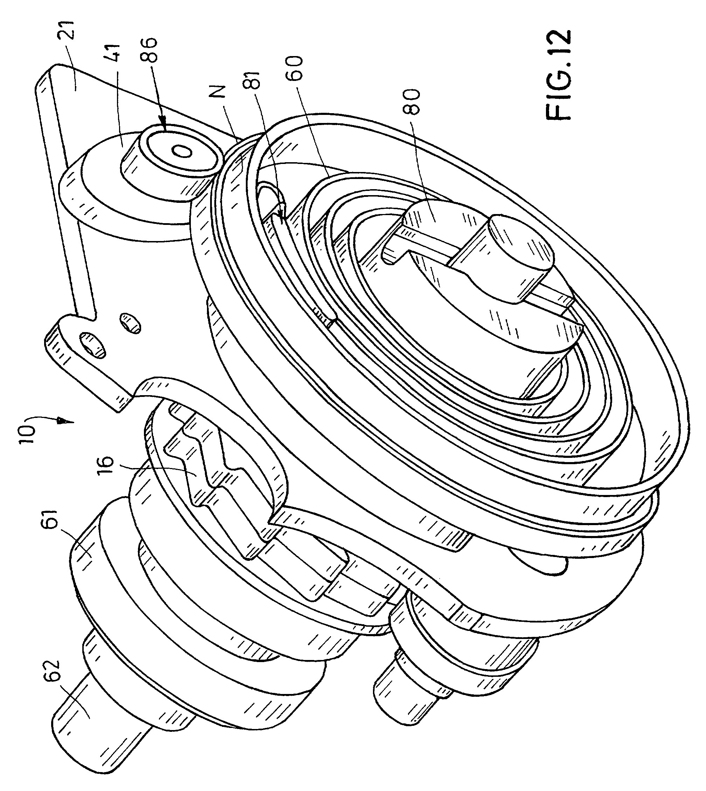

Die Nockenscheibe N ist auf dem Stumpf 63 des Zwischenteils 61 drehbar gelagert. Zwischen der Nockenscheibe N und einem fahrzeugseitig festgehaltenen Befestigungspunkt 80 ist das Antriebsübertragungsglied 60 angeordnet. Beim Ausführungsbeispiel handelt es sich, wie insbesondere in Fig. 12 deutlich wird, um eine Spiralfeder, welche mit ihrem einen Ende 81 mit der Nockenscheibe N und mit ihrem zweiten Ende auf nicht dargestellte Weise mit dem Befestigungspunkt 80 verbunden ist. Der Befestigungspunkt 80 ist hier an einem besonderen Bauteil angeordnet, was jedoch nicht zwingend notwendig ist.

Innerhalb des kragenförmigen Fortsatzes 77 der Nockenscheibe N ist eine Antriebs-Sperrklinke 82 schwenkbar um eine Achse 83 angeordnet. Die Antriebs-Sperrklinke 82 kann zwischen zwei Positionen verschwenkt werden. In Fig. 13 ist die Antriebs-Sperrklinke 82 in ihrer sperrenden, antreibenden Arbeitsposition dargestellt. In diesem Zustand wirken ein oder mehrere Zähne 84 der Antriebs-Sperrklinke 82 mit den Zähnen 76 des Antriebsgliedes 75 zusammen. Dies hat zur Folge, daß bei einer Drehung der Wickelwelle 12 in Abwickelrichtung u das Antriebsglied 75 die Nockenscheibe N in Abwickelrichtung u zunächst mitdreht.

Ausgehend von einer Darstellung gemäß Fig. 13 könnte die Nockenscheibe N in Abwickeldrehrichtung u um 270° gedreht werden, bis ein Steuerzapfen 85 der Antriebs-Sperrklinke 82 auf der ersten Steuerfläche 73 der Montageplatte 72 aufgleitet. Dabei wird die Antriebs-Sperrklinke 82 in ihre nicht sperrende, nicht antreibende, nicht dargestellte Ruheposition verschwenkt.

Weitere Umdrehungen des Antriebsgliedes 75 haben keinen Einfluß auf eine weitere Drehbewegung der Nockenscheibe N mit der Kurvenbahn K.

Durch die zunächst erfolgte Drehung der Nockenscheibe N um ca. 270° wurde das Antriebsübertragungsglied 60 durch Aufnahme potentieller Energie gespannt. Die gespeicherte Federkraft zwingt nun die Nockenscheibe N in ihre Ausgangsstellung gemäß Fig. 13 zurück und ist daher bestrebt, eine entgegengesetzte Drehung der Nockenscheibe N und der Kurvenbahn K in Aufwickelrichtung v zu verursachen.

Eine derartige Drehbewegung der Nockenscheibe N wird jedoch durch ein Verzögerungsglied (Bewegungsverzögerer) 41, beispielsweise eine Silikon-Dämpfungsvorrichtung, verlangsamt. Beim Ausführungsbeispiel gemäß Fig. 12 ist eine Andruckrolle 86 vorgesehen, die direkt auf der Außenumfangsfläche der Nockenscheibe N aufliegt. Selbstverständlich kommen auch andere Zeitverzögerungsglieder in Betracht.

Im folgenden wird auf das Zusammenspiel der Nockenscheibe N mit der Sperrklinke 19 bei dem Ausziehen einer Werkstoffbahn W eingegangen. Die Sperrklinke 19 befindet sich, wie oben beschrieben, während der ersten beiden Umdrehungen der Wickelwelle 12 in Nicht-Sperrstellung aufgrund der Stellung des Nockens 70 bzw. des Nockenelementes 65. Die Werkstoffbahn W ist folglich zunächst frei abziehbar.

Aufgrund der Drehung der Wickelwelle 12 im Abwickelsinne u wird die Nockenscheibe N im gleichen Drehsinn von dem Antriebsglied 75 mitbewegt. Dabei kommt der Bereich 79 der Kurvenbahn K in Kontakt mit dem Steuernocken 23 der Sperrklinke 19. Der Steuernocken 23 durchgreift in analoger Weise zu den bereits beschriebenen Ausführungsbeispielen ein Langloch 87 in der Tragplatte 21. Durch Drehung der Nockenscheibe N in Abwickelrichtung u um etwa 105° gelangt der Bereich 79 der Kurvenbahn K mit dem Steuerpocken 23 in Kontakt und hält die Sperrklinke 19 von einem Einfallen in ihre Sperrstellung ab.

Nach insgesamt zwei vollständigen Umdrehungen der Wikkelwelle 12 verhindert zwar der Nocken 70 des Nockenelementes 65 das Einfallen der Sperrklinke 19 in ihre Sperrstellung nicht mehr. Das Einfallen wird nun jedoch von dem Flächenbereich 79 der Kurvenbahn K verhindert. Somit kann die Werkstoffbahn W bis zu einer beliebig wählbaren Ausziehlänge frei ausgezogen werden.

Das Zeitverzögerungsglied 41 und die Federkraft des Antriebsübertragungsgliedes 60 sind derart aufeinander abgestimmt, daß die Zeit, innerhalb der die Nockenscheibe N aus der bezüglich Fig. 3 um 270° verdrehten Position in ihre Ausgangsstellung gemäß Fig. 13 zurückkehrt, deutlich länger ist als die Zeit, die ein Benutzer benötigt, um die Werkstoffbahn W auszuziehen und festzulegen.

Sobald die Nockenscheibe N in ihre Ausgangsstellung gemäß Fig. 13 zurückgedreht worden ist, kommt der Flächenbereich 78 der Kurvenbahn K mit dem Steuernocken 23 der Sperrklinke 19 in Kontakt und ermöglicht ein radiales Einfallen der Sperrklinke 19 in ihre Sperrstellung. In der Sperrstellung kooperiert die Sperrklinke 19 mit der Rastscheibe 16 und verhindert ein weiteres Abwickeln der Werkstoffbahn w.

Beim Zurückdrehen der Nockenscheibe N in ihre Ausgangsstellung gemäß Fig. 13 gleitet der Steuerzapfen 85 der Antriebs-Sperrklinke 82 auf der zweiten Steuerfläche 74 auf, so daß die Antriebs-Sperrklinke 82 in ihre antreibende, sperrende Arbeitsposition zurückverschwenkt wird.

Die Steuerflächen 73 und 74 sind Bestandteile der Montageplatte 72. Sie sind in Fig. 13 lediglich beispielhaft dargestellt und können in Umfangsrichtung auch durchaus voneinander beabstandet angeordnet werden. Je nach Anordnung der Steuerflächen 73, 74 ergibt sich für die Nockenscheibe N eine andere Ausgangsstellung.

Die Antriebs-Sperrklinke 82 weist beim Ausführungsbeispiel zwei Ausnehmungen 88 auf, in die das freie Ende 89 einer eine Blattfeder bildenden Stellfeder 90 eingreift. Die Stellfederanordnung sorgt dafür, daß die Antriebs-Sperrklinke 82 in ihrer einmal eingestellten Position gehalten ist, bis sie auf eine Steuerfläche 73, 74 trifft.

Beim Einfahren der Werkstoffbahn W ist einerseits eine Bewegung der Rastscheibe 16 in Aufwickeldrehrichtung v unbehindert an der Sperrklinke 19 vorbei und in analoger Weise eine Drehung des Antriebsgliedes 75 an der Antriebs-Sperrklinke 82 vorbei möglich. Dies ist insbesondere durch die unterschiedliche Flankensteilheit der Zähne 17, 76 bezüglich der beiden Drehrichtungen gewährleistet.

Beim Aufwickeln der Werkstoffbahn W werden der Nocken 70 und das_Nockenelement 65 in ihre Ausgangsstellung gemäß Fig. 11 zurückgedreht. Somit ist gewährleistet, daß ein erneutes Abwickeln der Werkstoffbahn W aus ihrem vollständig aufgewikkelten Zustand ungehindert möglich ist.

Es sei darauf hingewiesen, daß die Funktionsweise der Antriebs-Sperrklinke 82 und das Zusammenwirken mit den Steuerflächen 73 und 74 lediglich beispielhaft beschrieben ist. Die Drehposition gemäß Fig. 13 muß nicht zwingend die Ausgangsstellung der Kurvenbahn K bzw. der Nockenscheibe N darstellen. Insbesondere die getroffene Anordnung der Steuerflächen 73 und 74 kann prinzipiell beliebig gewählt werden.

Es kann auch vorgesehen sein, daß das Antriebsübertragungsglied 60 schon bei in Ausgangsstellung befindlicher Nokkenscheibe N eine potentielle Energie enthält. Bei einer Abziehbewegung der Werkstoffbahn W würde in diesem Falle das als Spiralfeder ausgebildete Antriebsübertragungsglied 60 dann weitergespannt, d.h., es nähme zusätzliche potentielle Energie auf.

Es ist in dem Zusammenhang wichtig, daß bei einer Rückbewegung der Nockenscheibe N in Aufwickeldrehrichtung v nach einem Aufgleiten des Steuerzapfens 85 der Antriebsperrklinke 82 auf der Steuerfläche 74 die Antriebssperrklinke 82 in ihre antreibende, sperrende Antriebsposition verschwenkt ist, und daher mit ihrem Zahn 84 mit den Zähnen 76 des Antriebsgliedes 75 in Eingriff gelangt. Eine weitere Relativdrehung der Nokkenscheibe N relativ zu dem Antriebsglied 75 ist daher in diesem Falle nicht möglich.

Bei einer Anordnung von Steuerflächen 73, 74 gemäß Fig. 13 befindet sich der Steuerzapfen 85 der Antriebssperrklinke 82 beim Abziehen der Werkstoffbahn W und nach seinem Aufgleiten auf der Steuerfläche 73 zunächst in einem Bereich 91. Anschließend wird die Nockenscheibe N aufgrund der Federkraft des Antriebsübertragungsgliedes 60 um nahezu 360° in Aufwikkelrichtung v zurückgedreht, bis der Steuerzapfen 85 auf der zweiten Steuerfläche 74 aufgleitet. Anschließend gelangt der Steuerzapfen 85 in einen Bereich 92, so daß sich die Antriebs-Sperrklinke 82 in Eingriff mit den Zähnen 76 des Antriebsgliedes 75 befindet.

Tatsächlich durchläuft die Nockenscheibe N bei dem Ausführungsbeispiel gemäß den Fig. 8 bis 13 bei einer Ausziehbewegung der Wickelbahn W somit zunächst eine Drehung um 360° in Abwickeldrehrichtung u und anschließend eine rückgerichtete Drehbewegung um 360° in Aufwickeldrehrichtung v. Wichtig ist jedoch, daß in diesem Fall die Funktionsbereiche 78 und 79 der Kurvenbahn K so angeordnet sind, daß bei in Ausgangsstellung befindlicher Kurvenbahn K der Funktionsbereich 78 mit dem Steuernocken 23 der Sperrklinke 19 zusammenwirkt, so daß die Sperrklinke 19 in ihre Sperrstellung gelangen kann.

## Patentansprüche

1. Sicherheitseinrichtung (10) für Fahrzeuge, insbesondere Laderaum-Trennvorrichtung für Kraftwagen, wie zum Beispiel für Kombinations-Personenkraftwagen od. dgl., mit einer entgegen dem Drehmoment eines Motors, zum Beispiel eines Federmotors, von einer Wickelwelle (12), die fahrzeugseitig in einer Halterung (11) aufgenommen ist, abrollbaren, mit ihrem abgerollten freien Endbereich fahrzeugseitig lösbar festzulegenden Werkstoffbahn (W), mit mindestens einer mit der Wickelwelle (12) drehfest verbundenen Rastscheibe (16), die mit einer in der Halterung gelagerten Sperrklinke (19) kooperiert, wobei die Sperrklinke (19) von einer Rückstellkraft, insbesondere von einer Federkraft, in ihrer Sperrstellung gehalten wird und die Wickelwelle (12) gegen ein Abrollen der Werkstoffbahn blockiert, wobei die Sperrklinke (19) von einer beweglichen Kurvenbahn (K) gesteuert ist, welche mittels einer von der Drehbewegung der Wickelwelle (12) abgeleiteten Bewegung antreibbar ist, **dadurch gekennzeichnet, dass** die Übertragung der Drehbewegung von der Wickelwelle (12) auf die bewegliche Kurvenbahn (K) unter Zwischenschaltung eines bei der Antriebsbewegung potentielle Energie sammelnden Antriebsübertragungsgliedes (S, T, 60) erfolgt.

2. Sicherheitseinrichtung nach Anspruch 1, **dadurch gekennzeichnet, daß** das Antriebsübertragungsglied (S, T, 60) bei der Abrollbewegung der Wickelwelle (12) eine potentielle Federenergie erhält.

3. Sicherheitseinrichtung nach Anspruch 1 oder 2, **dadurch gekennzeichnet, daß** als Antriebsübertragungsglied zwischen der Wickelwelle (12) und der Kurvenbahn (K) mindestens ein Federelement, insbesondere eine Sperrfeder (S) eingeschaltet ist.

4. Sicherheitseinrichtung nach einem der Ansprüche 1 bis 3, **dadurch gekennzeichnet, daß** die Sperrklinke (19) einen mit der Kurvenbahn (K) kooperierenden Steuernocken (23, 57) aufweist.

5. Sicherheitseinrichtung nach einem der vorangegangenen Ansprüche, **dadurch gekennzeichnet, daß** eine Bewegungsbahn der Kurvenbahn (K) durch zwei voneinander distanzierte Anschläge (39, 40), insbesondere von einem Löseanschlag (39) und einem Sperranschlag (40), begrenzt ist.

6. Sicherheitseinrichtung nach einem der vorangegangenen Ansprüche, **dadurch gekennzeichnet, daß** die Übertragung der Drehbewegung von der Wickelwelle (12) auf die bewegliche Kurvenbahn (K) unter Zwischenschaltung des Antriebs-Übertragungsgliedes (S, T) ungehindert, insbesondere ungebremst erfolgt.

7. Sicherheitseinrichtung nach einem der Ansprüche 1 bis 5, **dadurch gekennzeichnet, daß** die Übertragung der Drehbewegung von der Wickelwelle (12) auf die bewegliche Kurvenbahn (K) unter Zwischenschaltung des Antriebs-Übertragungsgliedes (T, S) gehemmt, insbesondere gebremst erfolgt.

8. Sicherheitseinrichtung nach einem der vorangegangenen Ansprüche, **dadurch gekennzeichnet, daß** die Einfallbewegung der Sperrklinke (19) durch ein Reibungsglied (41, 55) gebremst ist.

9. Sicherheitseinrichtung nach einem der vorangegangenen Ansprüche, **dadurch gekennzeichnet, daß** die Einfallbewegung der Sperrklinke (19) durch ein Zeitglied, beispielsweise durch ein elektronisches Zeitglied gesteuert ist.

10. Sicherheitseinrichtung nach einem der vorangegangenen Ansprüche, **dadurch gekennzeichnet, daß** zur Rückstellung der Kurvenbahn (K) in eine Ausgangsstellung ein besonderes Betätigungsglied vorgesehen ist.

11. Sicherheitseinrichtung nach einem der Ansprüche 1 bis 9, **dadurch gekennzeichnet, daß** zur Rückstellung der Kurvenbahn (K) in ihre Ausgangsstellung eine Rückstellfeder (R) vorgesehen ist.

12. Sicherheitseinrichtung nach Anspruch 10, **dadurch gekennzeichnet, daß** die Rückstellfeder (R) mit ihrem einen Ende (29) am Gehäuse (21) und mit ihrem anderen Ende (30) an der Nockenscheibe (N) anliegt.

13. Sicherheitseinrichtung nach einem der vorangegangenen Ansprüche, **dadurch gekennzeichnet, daß** die Kurvenbahn (K) im wesentlichen kreisförmig ist.

14. Sicherheitseinrichtung nach einem der vorangegangenen Ansprüche, **dadurch gekennzeichnet, daß** die Kurvenbahn (K) koaxial zur Wickelwelle (12) angeordnet ist.

15. Sicherheitseinrichtung nach einem der vorangegangenen Ansprüche, **dadurch gekennzeichnet, daß** die Sperrfeder (S) als Spiralfeder ausgebildet ist.

16. Sicherheitseinrichtung nach einem der vorangegangenen Ansprüche, **dadurch gekennzeichnet, daß** die Spiralfeder (S) koaxial zur Wickelwelle (12) angeordnet ist.

17. Sicherheitseinrichtung nach einem der vorangegangenen Ansprüchen, **dadurch gekennzeichnet, daß** die Kurvenbahn (K) Bestandteil einer Nockenscheibe (N) ist.

18. Sicherheitseinrichtung nach einem der vorangegangenen Ansprüche, **dadurch gekennzeichnet, daß** die Rastscheibe (16) mit einem zentralen Wellenstumpf (24) versehen ist.

19. Sicherheitseinrichtung nach Anspruch 18, **dadurch gekennzeichnet, daß** der Wellenstumpf (24) eine zentrale Lageröffnung (37) der Nockenscheibe (N) durchgreift.

20. Sicherheitseinrichtung nach einem der vorangegangenen Ansprüche, **dadurch gekennzeichnet, daß** die Nockenscheibe (N) lose auf dem Wellenstumpf (24) gelagert ist.

21. Sicherheitseinrichtung nach Anspruch 19, **dadurch gekennzeichnet, daß** eine Drehkupplung zwischen Nockenscheibe (N) und Wellenstumpf (24) lediglich unter Vermittlung der Sperrfeder (S) stattfindet.

22. Sicherheitseinrichtung nach einem der vorangegangenen Ansprüche, **dadurch gekennzeichnet, daß** ein Drehverzögerer, insbesondere eine Fettbremse (41) vorgesehen ist, der die Nockenscheibe (N) in Abwickeldrehrichtung (u) bremst.

23. Sicherheitseinrichtung nach einem der vorangegangenen Ansprüche, **dadurch gekennzeichnet, daß** als Antriebsübertragungsglied zwischen der Wickelwelle (12) und der Kurvenbahn (K) eine Torsionsfeder (T) angeordnet ist.

24. Sicherheitseinrichtung nach Anspruch 23, **dadurch gekennzeichnet, daß** die Torsionsfeder (T) in Abwickelrichtung (u) spannbar ist.

25. Sicherheitseinrichtung nach Anspruch 24, **dadurch gekennzeichnet, daß** die Torsionsfeder (T) in Aufwickelrichtung (v) spannbar ist.

26. Sicherheitseinrichtung nach Anspruch 24, **dadurch gekennzeichnet, daß** bei vollständig aufgewickelter Werkstoffbahn die Torsionsfeder (T) die Kurvenbahn (K) in Aufwickelrichtung (v) geringfügig spannt.

27. Sicherheitseinrichtung nach einem der vorangegangenen Ansprüche, **dadurch gekennzeichnet, daß** die Kurvenbahn (K) mittels einer Schaltvorrichtung (82) mit der Wickelwelle (12) koppel- bzw. von dieser entkoppelbar ist.

28. Sicherheitseinrichtung nach Anspruch 27, **dadurch gekennzeichnet, daß** die von der Drehbewegung der Wickelwelle (12) abgeleitete Bewegung der Kurvenbahn (K) in zwei Abschnitte unterteilbar ist, und daß die Kurvenbahn (K) in dem einen Bewegungsabschnitt mit der Wickelwelle (12) gekoppelt und in dem anderen Bewegungsabschnitt von der Wickelwelle (12) entkoppelt ist.

29. Sicherheitseinrichtung nach Anspruch 27 oder 28, **dadurch gekennzeichnet, daß** der erste Bewegungsabschnitt eine Antriebsbewegung der Kurvenbahn (K) in Abwickelrichtung (u), und der zweite Bewegungsabschnitt eine Antriebsbewegung der Kurvenbahn (K) in Aufwickelrichtung (v) umfaßt.

30. Sicherheitseinrichtung nach Anspruch 27 oder 29, **dadurch gekennzeichnet, daß** die Kopplung der Kurvenbahn (K) mit der Wickelwelle (12) über ein im wesentlichen starres Antriebsglied (75) erfolgt, welches mit der Wickelwelle (12) zumindest mittelbar drehfest verbunden ist.

31. Sicherheitseinrichtung nach einem der Ansprüche 27 bis 30, **dadurch gekennzeichnet, daß** die Kurvenbahn (K) über das Antriebsübertragungsglied (60) mit einem fahrzeugseitigen Befestigungspunkt (80) verbunden ist.

32. Sicherheitseinrichtung nach einem der Ansprüche 27 bis 31, **dadurch gekennzeichnet, daß** die Schaltvorrichtung nach Art einer Antriebs-Sperrklinke (82) ausgebildet ist, die schwenkbar an der Kurvenbahn (K) angeordnet ist.

33. Sicherheitseinrichtung nach Anspruch 32, **dadurch gekennzeichnet, daß** die Antriebs-Sperrklinke (82) zwischen einer nicht-sperrenden, nicht-antreibenden Ruheposition und einer sperrenden, antreibenden Arbeitsposition verschwenkbar ist.

34. Sicherheitseinrichtung nach Anspruch 33, **dadurch gekennzeichnet, daß** die Antriebs-Sperrklinke (82) von Steuerflächen (73, 74) verschwenkbar ist, die fest relativ zur fahrzeugseitigen Halterung angeordnet sind.

35. Sicherheitseinrichtung nach Anspruch 34, **dadurch gekennzeichnet, daß** zwei in die Bewegungsbahn der Antriebs-Sperrklinke (82) eingreifende Steuerflächen (73, 74) vorgesehen sind.

36. Sicherheitseinrichtung nach Anspruch 35, **dadurch gekennzeichnet, daß** die Antriebs-Sperrklinke (82) bei Drehung der Kurvenbahn (K) in Abwickelrichtung (u) auf einer ersten Steuerfläche (73) aufgleitet und die Antriebs-Sperrklinke (82) aus ihrer sperrenden, antreibenden Arbeitsposition in ihre nichtsperrende, nichtantreibende Ruheposition verschwenkt.

37. Sicherheitseinrichtung nach Anspruch 36, **dadurch gekennzeichnet, daß** die Antriebs-Sperrklinke (82) bei Drehung der Kurvenbahn (K) in Aufwickelrichtung (v) auf einer zweiten Steuerfläche (74) aufgleitet und die Antriebs-Sperrklinke (82) aus ihrer nicht-sperrenden, nichtantreibenden Ruheposition in ihre sperrende, antreibende Arbeitsposition verschwenkt.

38. Sicherheitseinrichtung nach einem der Ansprüche 27 bis 37, **dadurch gekennzeichnet, daß** sich bei vollständig aufgewickelter Werkstoffbahn (W) die Kurvenbahn (K) in einer definierten Drehposition (Ausgangsstellung) relativ zu der fahrzeugseitigen Halterung befindet.

39. Sicherheitseinrichtung nach Anspruch 38, **dadurch gekennzeichnet, daß** sich die Antriebs-Sperrklinke (82) bei in Ausgangsstellung befindlicher Kurvenbahn (K) in ihrer sperrenden, antreibenden Arbeitsposition befindet.

40. Sicherheitseinrichtung nach Anspruch 39, **dadurch gekennzeichnet, daß** in entkoppeltem Zustand der Kurvenbahn (K) das Antriebsübertragungsglied (60) die Kurvenbahn (K) in ihre Ausgangsstellung zurückzwingt.

41. Sicherheitseinrichtung nach Anspruch 40, **dadurch gekennzeichnet, daß** bei in Ausgangsstellung befindlicher Kurvenbahn (K) die Sperrklinke (19) mit einem Bereich (78) der Kurvenbahn (K) zusammenwirkt, der ein Einfallen der Sperrklinke (19) in ihre Sperrstellung ermöglicht.

42. Sicherheitseinrichtung nach Anspruch 41, **dadurch gekennzeichnet, daß** eine Vorrichtung (64) vorgesehen ist, die bei vollständig aufgewickelter Werkstoffbahn (W) die Sperrklinke (19) außer Eingriff mit der Rastscheibe (16) hält.

43. Sicherheitseinrichtung nach Anspruch 42, **dadurch gekennzeichnet, daß** die Vorrichtung (64) ein Nockenelement (65) umfaßt, das von einer von der Wickelwelle (12) abgeleiteten Bewegung antreibbar ist.

44. Sicherheitseinrichtung nach Anspruch 43, **dadurch gekennzeichnet, daß** das Nockenelement (65) mit einer relativ zur Wickelwelle (12) reduzierten Drehzahl angetrieben ist.

45. Sicherheitseinrichtung nach Anspruch 44, **dadurch gekennzeichnet, daß** das Nockenelement (65) bei einer Ausziehbewegung der Werkstoffbahn (W) über dessen maximale Ausziehlänge eine Gesamtdrehung von weniger als 360° durchläuft.

## Claims

1. Safety device (10) for vehicles, in particular luggage space dividing device for motor cars, such as, for example, private estate cars or similar, with a length of material (W) which can be uncoiled against the torque of a motor, for example, a spring drive, of a winding shaft (12), accommodated in a mount (11) on the vehicle side, and to be detachably fixed on the vehicle side with its uncoiled open end region, with at least one locking disc (16) connected as fixed against rotation to the winding shaft (12), which locking disc cooperates with a blocking catch (19) supported in the mount, wherein the blocking catch (19) is held in its blocking position by a restoring force, in particular by a spring force, and the winding shaft (12) is blocked against uncoiling of the length of material, wherein the blocking catch (19) is controlled by a movable curved track (K), which can be driven by means of a movement derived from the rotational movement of the winding shaft (12), **characterised in that** transmission of the rotational movement from the winding shaft (12) on to the movable curved track (K) takes place with intermediate connection of a drive transmission member (S, T, 60) which collects potential energy during the drive movement.

2. Safety device according to claim 1, **characterised in that** the drive transmission member (S, T, 60) receives potential spring energy during the uncoiling movement of the winding shaft (12).

3. Safety device according to claim 1 or 2, **characterised in that** at least one spring element, in particular a retaining spring (S) is connected in as drive transmission member between the winding shaft (12) and the curved track (K).

4. Safety device according to one of claims 1 to 3, **characterised in that** the blocking catch (19) has a control cam (23, 57) cooperating with the curved track (K).

5. Safety device according to one of the preceding claims, **characterised in that** a movement path of the curved track (K) is limited by two stops (39, 40), distanced apart, in particular by a release stop (39) and a blocking stop (40).

6. Safety device according to one of the preceding claims, **characterised in that** transmission of the rotational movement from the winding shaft (12) on to the movable curved track (K) takes place with intermediate connection of the drive transmission member (S, T) unhindered, in particular without slowing down.

7. Safety device according to one of claims 1 to 5, **characterised in that** transmission of the rotational movement from the winding shaft (12) on to the movable curved track (K) takes place with intermediate connection of the drive transmission member (S, T) impeded, in particular slowed down.

8. Safety device according to one of the preceding claims, **characterised in that** the latching in movement of the blocking catch (19) is slowed down by a friction member (41, 55).

9. Safety device according to one of the preceding claims, **characterised in that** the latching in movement of the blocking catch (19) is controlled by a time member, for example by an electronic time member.

10. Safety device according to one of the preceding claims, **characterised in that** a special actuating member is provided for readjusting the curved track (K) into an initial position.

11. Safety device according to one of claims 1 to 9, **characterised in that** a readjusting spring (R) is provided for readjusting the curved track (K) into its initial position.

12. Safety device according to claim 10, **characterised in that** the readjusting spring (R) rests with one of its ends (29) on the housing (21) and with its other end (30) on the cam disc (N).

13. Safety device according to one of the preceding claims, **characterised in that** the curved track (K) is substantially circular in shape.

14. Safety device according to one of the preceding claims, **characterised in that** the curved track (K) is arranged coaxially to the winding shaft (12).

15. Safety device according to one of the preceding claims, **characterised in that** the retaining spring (S) is constructed as a spiral spring.

16. Safety device according to one of the preceding claims, **characterised in that** the spiral spring (S) is arranged coaxially to the winding shaft (12).

17. Safety device according to one of the preceding claims, **characterised in that** the curved track (K) is part of a cam disc (N).

18. Safety device according to one of the preceding claims, **characterised in that** the locking disc (16) is provided with a central shaft end (24).

19. Safety device according to claim 18, **characterised in that** the shaft end (24) penetrates a central bearing opening (37) of the cam disc (N).

20. Safety device according to one of the preceding claims, **characterised in that** the cam disc (N) is supported loosely on the shaft end (24).

21. Safety device according to claim 19, **characterised in that** a rotational coupling between cam disc (N) and shaft end (24) takes place only under the agency of the retaining spring (S).

22. Safety device according to one of the preceding claims, **characterised in that** a rotational retarder, in particular a grease brake (41) is provided, which slows down the cam disc (N) in the uncoiling direction of rotation (u).

23. Safety device according to one of the preceding claims, **characterised in that** a torsion spring (T) is arranged as drive transmission member between the winding shaft (12) and the curved track (K).

24. Safety device according to claim 23, **characterised in that** the torsion spring (T) can be tensioned in the unwinding direction (u).

25. Safety device according to claim 24, **characterised in that** the torsion spring (T) can be tensioned in the winding up direction (v).

26. Safety device according to claim 24, **characterised in that**, with fully wound up length of material, the torsion spring (T) minimally tensions the curved track (K) in the winding up direction (v).

27. Safety device according to one of the preceding claims, **characterised in that** the curved track (K) can be coupled to or uncoupled from the winding shaft (12) by means of a switching device (82).

28. Safety device according to claim 27, **characterised in that** the movement of the curved track (K) derived from the rotational movement of the winding shaft (12) can be divided into two sections and the curved track (K) is coupled in one of the movement sections to the winding shaft (12) and in the other movement section is uncoupled from the winding shaft (12).

29. Safety device according to claim 27 or 28, **characterised in that** the first movement section comprises a drive movement of the curved track (K) in the unwinding direction (u) and the second movement section comprises a drive movement of the curved track (K) in the winding up direction (v).

30. Safety device according to claim 27 or 28, **characterised in that** coupling of the curved track (K) to the winding shaft (12) takes place via a substantially rigid drive member (75), which is connected as fixed against rotation at least indirectly to the winding shaft (12).

31. Safety device according to one of claims 27 to 30, **characterised in that** the curved track (K) is connected to a fastening point (80) on the vehicle side via the drive transmission member (60).

32. Safety device according to one of claims 27 to 31, **characterised in that** the switching device is constructed as a kind of drive blocking catch (82), arranged as swivellable on the curved track (K).

33. Safety device according to claim 32, **characterised in that** the drive blocking catch (82) is swivellable between a non-blocking, non-driving resting position and a blocking, driving operating position.

34. Safety device according to claim 33, **characterised in that** the drive blocking catch (82) is swivellable by means of control faces (73, 74), arranged as fixed relative to the mount on the vehicle side.

35. Safety device according to claim 34, **characterised in that** two control faces (73, 74) engaging in the movement path of the drive blocking catch (82) are provided.

36. Safety device according to claim 35, **characterised in that**, on rotation of the curved track (K) in the unwinding direction (u), the drive blocking catch (82) slides on a first control face (73) and the drive blocking catch (82) swivels out of its blocking, driving operating position into its non-blocking, non-driving resting position.

37. Safety device according to claim 36 **characterised in that**, on rotation of the curved track (K) in the winding up direction (v) the drive blocking catch (82) slides on a second control face (74) and the drive blocking catch (82) swivels out of its non-blocking, non-driving resting position into its blocking, driving operating position.

38. Safety device according to one of claims 27 to 37, **characterised in that**, when the length of material (W) is fully wound up the curved track (K) is in a defined rotational position (initial position) relative to the mount on the vehicle side.

39. Safety device according to claim 38 **characterised in that**, when the curved track (K) is in the initial position, the drive blocking catch (82) is in its blocking, driving operating position.

40. Safety device according to claim 39, **characterised in that** in the uncoupled state of the curved track (K) the drive transmission member (60) forces the curved track (K) back into its initial position.

41. Safety device according to claim 40, **characterised in that** when the curved track (K) is in the initial position the blocking catch (19) cooperates with a region (78) of the curved track (K) which enables the blocking catch (19) to latch into its blocking position.

42. Safety device according to claim 41, **characterised in that** a device (64) is provided which holds the blocking catch (19) out of engagement with the locking disc (16) when the length of material (W) is fully wound up.

43. Safety device according to claim 42, **characterised in that** the device (64) comprises a cam element (65) which can be driven by a movement derived from the winding shaft (12).

44. Safety device according to claim 43, **characterised in that** the cam element (65) is driven at a number of revolutions which is reduced relative to the winding shaft (12) .

45. Safety device according to claim 44, **characterised in that**, on a pull-out movement of the length of material (W) over its maximum pull-out length, the cam element (65) passes through a total rotation of less than 360°.

## Revendications

1. Dispositif de sécurité (10) pour des véhicules, en particulier dispositif de séparation de compartiment de chargement pour des véhicules automobiles, tel que par exemple des voitures particulières de type commercial ou analogues, avec une bande de matériau (W), à fixer de façon désolidarisable côté véhicule par sa zone d'extrémité libre déroulée, la bande de matériau étant déroulable à l'encontre du couple d'un moteur, par exemple d'un moteur à ressort, depuis un arbre d'enroulement (12), logé côté véhicule dans une fixation (11), avec au moins un disque d'encliquetage (16) relié de façon assujettie en rotation à l'arbre d'enroulement (12), le disque d'encliquetage (16) coopérant avec un cliquet d'encliquetage (19) monté dans la fixation, le cliquet d'encliquetage (19) étant maintenu à sa position de blocage par une force de rappel en particulier d'une force élastique et l'arbre d'enroulement (12) est bloqué pour empêcher tout déroulement de la bande de matériau, où le cliquet d'encliquetage (19) est commandé par une piste pour came (K) mobile susceptible d'être entraînée à l'aide d'un déplacement dérivé du mouvement rotatif de l'arbre de roulement (12), **caractérisé en ce que** la transmission du mouvement rotatif depuis l'arbre d'enroulement (12) à la piste pour came (K) mobile s'effectue avec interposition d'un organe de transmission d'entraînement (S, T, 60) collectant de l'énergie potentielle lors du déplacement d'entraînement.

2. Dispositif de sécurité selon la revendication 1, **caractérisé en ce que** l'organe de transmission d'entraînement (S, T, 60) reçoit une énergie élastique potentielle lors du mouvement de déroulement de l'arbre d'enroulement (12).

3. Dispositif de sécurité selon la revendication 1 ou la revendication 2, **caractérisé en ce qu'**on met en oeuvre au moins un élément élastique (en particulier un ressort de blocage (S) à titre d'organe de transmission d'entraînement, entre l'arbre d'entraînement (12) et la piste pour came (K).

4. Dispositif de sécurité selon l'une des revendications 1 à 3, **caractérisé en ce que** le cliquet de blocage (19) présente une came de commande (23, 57) coopérant avec la piste pour came (K).

5. Dispositif de sécurité selon l'une des revendications précédentes, **caractérisé en ce qu'**une trajectoire de déplacement de la piste pour came (K) est délimitée par deux butées (39, 40) espacées l'une de l'autre, en particulier par une butée de désolidarisation (39) et une butée de blocage (40).

6. Dispositif de sécurité selon l'une des revendications précédentes, **caractérisé en ce que** la transmission du mouvement rotatif de l'arbre d'enroulement (12) à la piste pour came (K) mobile se fait sans entrave, en particulier sans freinage, avec interposition de l'organe de transmission d'entraînement (S, T).

7. Dispositif de sécurité selon l'une des revendications 1 à 5, **caractérisé en ce que** la transmission du mouvement rotatif de l'arbre d'enroulement (12) à la piste pour came (K) mobile se fait de façon entravée, en particulier freinée, avec interposition de l'organe de transmission d'entraînement (T, S).

8. Dispositif de sécurité selon l'une des revendications précédentes, **caractérisé en ce que** le déplacement d'encliquetage du cliquet de blocage (19) est freiné par un organe de frottement (41, 55).

9. Dispositif de sécurité selon l'une des revendications précédentes, **caractérisé en ce que** le déplacement d'encliquetage du cliquet de blocage (19) est commandé par un organe minuteur, en particulier par un organe minuteur électronique.

10. Dispositif de sécurité selon l'une des revendications précédentes, **caractérisé en ce qu'**un organe d'actionnement particulier est prévu pour rappeler la piste pour came (K) à une position initiale.

11. Dispositif de sécurité selon l'une des revendications 1 à 9, **caractérisé en ce qu'**un ressort de rappel (R) est prévu pour rappeler la piste pour came (K) à sa position initiale.

12. Dispositif de sécurité selon la revendication 10, **caractérisé en ce que** le ressort de rappel (R) appuie par une extrémité (29) sur le boîtier (21) et par l'autre extrémité (30) sur le disque de came (N).

13. Dispositif de sécurité selon l'une des revendications précédentes, **caractérisé en ce que** la piste pour came (K) est de forme sensiblement circulaire.

14. Dispositif de sécurité selon l'une des revendications précédentes, **caractérisé en ce que** la piste pour came (K) est disposée coaxialement à l'arbre d'enroulement (12).

15. Dispositif de sécurité selon l'une des revendications précédentes, **caractérisé en ce que** le ressort de blocage (S) est réalisé sous la forme de ressort spirale.

16. Dispositif de sécurité selon l'une des revendications précédentes, **caractérisé en ce que** le ressort spirale (S) est disposé coaxialement à l'arbre d'enroulement (12).

17. Dispositif de sécurité selon l'une des revendications précédentes, **caractérisé en ce que** la piste pour came (K) fait partie d'un disque pour came (N).

18. Dispositif de sécurité selon l'une des revendications précédentes, **caractérisé en ce que** le disque d'encliquetage (16) est muni d'un tronc d'arbre (24) central.

19. Dispositif de sécurité selon la revendication 18, **caractérisé en ce que** le tronc d'arbre (24) traverse une ouverture de palier (37) centrale du disque pour came (N).

20. Dispositif de sécurité selon l'une des revendications précédentes, **caractérisé en ce que** la piste pour came (N) est montée de façon lâche sur le tronc d'arbre (24).

21. Dispositif de sécurité selon la revendication 19, **caractérisé en ce qu'**un accouplement rotatif est effectué entre le disque pour came (N) et le tronc d'arbre (24) uniquement par l'intermédiaire du ressort de blocage (S).

22. Dispositif de sécurité selon l'une des revendications précédentes, **caractérisé en ce qu'**un retardateur de rotation, en particulier un frein à graisse (41) est prévu qui freine le disque pour came (N) dans le sens de rotation du déroulement (u).

23. Dispositif de sécurité selon l'une des revendications précédentes, **caractérisé en ce que** l'on dispose comme organe de transmission d'entraînement entre l'arbre d'enroulement (12) et la piste pour came (K) un ressort de torsion (T).

24. Dispositif de sécurité selon la revendication 23, **caractérisé en ce que** le ressort de torsion (T) est susceptible d'être tendu dans le sens du déroulement (u).

25. Dispositif de sécurité selon la revendication 24, **caractérisé en ce que** le ressort de torsion (T) est susceptible d'être tendu dans le sens d'enroulement (v).

26. Dispositif de sécurité selon la revendication 24, **caractérisé en ce que** lorsque la bande de matériau est complètement enroulée, le ressort de torsion (T) tend légèrement la piste pour came (K) dans le sens d'enroulement (v).

27. Dispositif de sécurité selon l'une des revendications précédentes, **caractérisé en ce que** la piste pour came (K) est susceptible d'être couplée à l'arbre d'entraînement (12) ou d'en être désaccouplé, à l'aide d'un dispositif de manoeuvre (82) .

28. Dispositif de sécurité selon la revendication 27, **caractérisé en ce que** le mouvement, dérivé du mouvement rotatif de l'arbre d'entraînement (12) de la piste pour came (K) est susceptible d'être subdivisé en deux parties, et **en ce que** la piste pour came (K) dans un tronçon de déplacement est couplé à l'arbre d'enroulement (12) et dans l'autre tronçon de déplacement est désaccouplé de l'arbre d'enroulement (12).

29. Dispositif de sécurité selon la revendication 27 ou 28, **caractérisé en ce que** le premier tronçon de déplacement comprend un déplacement d'entraînement de la piste pour came (K) dans le sens de déroulement (u), et le deuxième tronçon de déplacement comprend un déplacement d'entraînement dans la piste pour came (K) dans le sens d'enroulement (v).

30. Dispositif de sécurité selon la revendication 27 ou 29, **caractérisé en ce que** le couplage de la piste pour came (K) à l'arbre d'entraînement (12) s'effectue par l'intermédiaire d'un organe d'entraînement (75) pratiquement rigide qui est relié de façon assujettie en rotation, au moins indirectement, à l'arbre d'enroulement (12).

31. Dispositif de sécurité selon l'une des revendications 27 à 30, **caractérisé en ce que** la piste pour came (K) est reliée à un point de fixation (80) situé côté véhicule, par l'intermédiaire de l'organe de transmission d'entraînement (60).

32. Dispositif de sécurité selon l'une des revendications 27 à 31, **caractérisé en ce que** le dispositif de manoeuvre est réalisé à la façon d'un cliquet de blocage d'entraînement (82) disposé de façon à pouvoir pivoter sur la piste pour came (K).

33. Dispositif de sécurité selon la revendication 32, **caractérisé en ce que** le cliquet de blocage d'entraînement (82) est susceptible d'être pivoté entre une position de repos, non bloquante, non entraînante et une position de travail bloquante entraînante.

34. Dispositif de sécurité selon la revendication 33, **caractérisé en ce que** le cliquet de blocage d'entraînement (82) est susceptible d'être pivoté par des faces de commande (73, 74) disposée de façon rigide par rapport à la fixation située côté véhicule.

35. Dispositif de sécurité selon la revendication 34, **caractérisé en ce que** deux faces de commande (73, 74) s'engageant dans la trajectoire de déplacement du cliquet de blocage d'entraînement (82) sont prévues.

36. Dispositif de sécurité selon la revendication 35, **caractérisé en ce que** le cliquet de blocage d'entraînement (82), lors de la rotation de la piste pour came (K) dans le sens de déroulement (u) glisse sur la première face de commande (73) et le cliquet de blocage d'entraînement (82) pivote, de sa position de travail bloquante entraînante à sa position de repos non-bloquante, non-entraînante.

37. Dispositif de sécurité selon la revendication 36, **caractérisé en ce que** le cliquet de blocage d'entraînement (82), lors de la rotation de la piste pour came (K) dans le sens d'enroulement (v) glisse sur une deuxième face de commande (74) et le cliquet de blocage d'entraînement (82) pivote de sa position de repos non-bloquante, non-entraînante, à sa position de travail bloquante entraînante.

38. Dispositif de sécurité selon l'une des revendications 27 à 37, **caractérisé en ce que** lorsque la bande de matériau (W) est complètement enroulée, la piste pour came (K) se trouve en une position de rotation définie (position initiale) par rapport à la fixation côté véhicule.

39. Dispositif de sécurité selon la revendication 38, **caractérisé en ce que** le cliquet de blocage d'entraînement (82) se trouve à sa position de travail bloquante entraînante lorsque la piste pour came (K) se trouve en position initiale.

40. Dispositif de sécurité selon la revendication 39, **caractérisé en ce qu'**à l'état désaccouplé de la piste pour came (K), l'organe de transmission d'entraînement (60) contraint la piste pour came (K) à revenir de façon forcée à sa position initiale.

41. Dispositif de sécurité selon la revendication 40, **caractérisé en ce que** lorsque la piste pour came (K) se trouve à la position initiale, le cliquet de blocage (19) coopère avec une zone (78) de la piste pour came (K) qui permet un encliquetage du cliquet de blocage (19) à sa position de blocage.

42. Dispositif de sécurité selon la revendication 41, **caractérisé en ce qu'**un dispositif (64) est prévu qui, lorsque la bande de matériau (W) est complètement enroulée, maintient le cliquet de blocage (19) hors de prise avec le disque d'encliquetage (16).

43. Dispositif de sécurité selon la revendication 42, **caractérisé en ce que** le dispositif (64) comprend un élément formant came (65) susceptible d'être entraîné par un mouvement dérivé de l'arbre d'enroulement (12).

44. Dispositif de sécurité selon la revendication 43, **caractérisé en ce que** l'élément formant came (65) est entraîné à une vitesse de rotation réduite par rapport à celle de l'arbre d'entraînement (12).

45. Dispositif de sécurité selon la revendication 44, **caractérisé en ce que** l'élément formant came (65) lors d'un déplacement d'extraction de la bande de matériau (W) sur sa longueur d'extraction maximale effectue une rotation globale inférieure à 360°.
